# EUROPEAN PATENT SPECIFICATION

(11) **EP 1 949 092 B1**
(45) Date of publication and mention of the grant of the patent: **02.08.2017**
(21) Application number: 06836436.3
(22) Date of filing: 20.10.2006
(51) Int. Cl.: G01N 31/22, G01N 21/78

(54) **MATERIAL COMPOSITIONS FOR SENSORS FOR DETERMINATION OF CHEMICAL SPECIES AT TRACE CONCENTRATIONS AND METHOD OF USING SENSORS**
MATERIALZUSAMMENSETZUNGEN FÜR SENSOREN ZUR BESTIMMUNG CHEMISCHER SPEZIES IN SPURENKONZENTRATIONEN SOWIE VERFAHREN ZUR VERWENDUNG DER SENSOREN
COMPOSITIONS A BASE DE MATERIAUX POUR CAPTEURS POUR LA DETERMINATION D'ESPECES CHIMIQUES A DES CONCENTRATIONS A L'ETAT DE TRACES ET PROCEDE D'UTILISATION DE CAPTEURS

(30) Priority: 26.10.2005 US 259506
(43) Date of publication of application: 30.07.2008
(73) Proprietor: GENERAL ELECTRIC COMPANY, Schenectady, NY 12345 (US)
(72) Inventor: POTYRAILO, Radislav, A., Niskayuna, NY 12309 (US); SIVAVEC, Timothy, M., Clifton Park, NY 12065 (US); XIAO, Caibin, Harleysville, PA 19438 (US); CECCONIE, Theodore, J., Buckingham, PA 18912 (US); HASSIB, Lamyaa, Niskayuna, NY 12309 (US); LEACH, Andrew, M., Cliffton Park, NY 12065 (US); ENGEL, David, B., The Woodlands, TX 77382 (US)
(74) Representative: Foster, Christopher Michael
(86) International application number: PCT/US2006/041104
(87) International publication number: WO 2007/050463

(56) References cited:
- EP-A- 0 952 451
- WO-A-00/02845
- WO-A-99/09406
- WO-A2-2005/066275
- US-A- 5 005 572
- MUNOZ M A ET AL: "DIRECT DETERMINATION OF INORGANIC PHOSPHORUS IN SERUM WITH A SINGLE REAGENT" CLINICAL CHEMISTRY, vol. 29, no. 2, 1983, pages 372-374, XP002423920 ISSN: 0009-9147

## Description

### BACKGROUND OF THE INVENTION

### Field Of The Invention

The present invention relates generally to sensors used in optical analysis of samples, and in particular relates to the material composition of sensors and methods for measuring trace concentrations of chemical species using the sensors.

### Description of Related Art

Sensor methods and sensor films for quantification of volatile and nonvolatile compounds in fluids are known in the art. Typically, quantification of these parameters is performed using dedicated sensor systems that are specifically designed for this purpose. These sensor systems operate using a variety of principles including electrochemical, optical, acoustic, and magnetic. For example, sensor systems are used to conduct optical inspection of biological, chemical, and biochemical samples. A variety of spectroscopic sensors operating with colorimetric liquid and solid reagents have been developed. In fact, spectophotometric indicators in analytical chemistry have become the reagents of choice in many commercially available optical sensors and probes.

Optical sensors possess a number of advantages over other sensor types, the most important being their wide range of transduction principles: optical sensors can respond to analytes for which other sensors are not available. Also, with optical sensors it is possible to perform not only "direct" analyte detection, in which the spectroscopic features of the analyte are measured, but also "indirect" analyte determination, in which a sensing reagent is employed. Upon interaction with the analyte species, such a reagent undergoes a change in its optical property, e.g. elastic or inelastic scattering, absorption, luminescence intensity, luminescence lifetime or polarization state. Significantly, this sort of indirect detection combines chemical selectivity with that offered by the spectroscopic measurement and can often overcome otherwise troublesome interference effects.

Because spectophotometric indicators were originally developed for aqueous applications, their immobilization into a solid support is a key issue for their application in optical sensing. Polymeric materials for reagent-based optical sensors are often complex multicomponent formulations. The key formulation ingredients include a chemically-sensitive reagent (indicator), a polymer matrix, auxiliary minor additives, and a common solvent or solvent mixture. However, it is difficult to predict the best formulation of the sensor material to yield a certain desired functionality.

For example, phosphate is a frequently analyzed substance in the water treatment industry. Phosphate analysis is also common in environmental monitoring, in clinic diagnosis, and in other industrial places such as mining and metallurgical processes. Optical sensors are commonly used for analysis of phosphate.

A commonly used optical method for phosphate determination is the molybdenum blue method. The basic mechanism of the molybdenum blue method includes the formation of a heteropoly acid (HPA) by reaction of an orthophosphate with a molybdate. A molybdic acid is formed and then reduced using a reducing agent under acidic conditions resulting in color generation. Several other methods for phosphate analysis in aqueous solution based on the HPA chemistry are also known. They include vanadomolybdophosphoric acid method, molybdenum-stannous chloride method, and cationic dye-HPA complex method. The HPA method may be colorimetric, that is a color change of the sensor results after contacting with the analyte, and/or it may be photometric, that is a measurable change in the optical property of the sensor results after contacting with the analyte.

The known photometric methods for phosphate analysis based on the formation of HPA require a strong acidic media, necessitating the use of concentrated sulfuric acid solutions in sensor formulations. In the case of cationic dye-HPA complex method, triphenylmethane dyes are commonly used. The absorption band of triphenylmethane solutions at a neutral pH usually overlaps with that of the dye-HPA complex. Thus, the pH of the test media for phosphate determination has to be controlled below the transition pH of the dye in order to reveal the absorbance change due to formation of the dye-HPA complex. The known photometric methods have several disadvantages, including requiring corrosive and toxic reagents and, in the case of cationic dye-HPA complex, being highly pH dependent.

Silicate interference is another disadvantage of the HPA methods for phosphate analysis. A 3.0 ppm silicate in the sample water is known to interfere with cationic dye-HPA method. The commonly used molybdenum blue method is known to tolerate up to only 10 ppm silicate concentrations. Silicates are ubiquitous in natural water and hence it becomes difficult to determine low concentrations of phosphate in these cases because of the silicate interference.

Moreover, the reagents employed in known photometric methods are usually incompatible, leading to a stepwise approach to phosphate determination. The sample is added to a reactor (or confined location) with pre-existing reagents and then exposed to the separately stored reducing agent. This instability and lack of chemical compatibility of the reagents hinders a one-reactor approach, thus restricting the development of self-contained sensors.

For convenient and efficient application of sensors as on-site test devices, self-contained solid sensors are needed. Because optical indicators were originally developed for aqueous applications, their immobilization into a solid support is a key issue for their application in optical sensing. The incompatibility of reagents and the low pH requirement hinders this immobilization. Additionally, the sensitivity of the solid-state sensors to low concentrations is also an issue. For example, in US Patent No. 5,858,797, a phosphate test strip based on molybdenum blue chemistry was described to be sensitive to phosphate concentration only above 6 ppm. Moreover, the molybdenum blue reagent and the reducing agent had to be deposited into separate layers to minimize reagent stability problems.

EP0952451, WO 2005/066275 and WO 99/09406 disclose methods of quantitatively measuring the concentration of a chemical species in a sample with a sensor film.

Thus, there exists a strong need for simplified sensors that can easily be used to carry out optical analysis of multiple quantitative assays and/or other biological, chemical, and physical environmental parameters with high reproducibility that yield improved sensor sensitivity, decreased response to interferences, enhanced stability, and other desired parameters.

### SUMMARY OF THE INVENTION

The invention is directed to a method according to claim 1.

The present invention and its advantages over the prior art will become apparent upon reading the following detailed description and the appended claims with reference to the accompanying drawings.

### BRIEF DESCRIPTION OF THE DRAWINGS

The above mentioned and other features of this invention will become more apparent and the invention itself will be better understood by reference to the following description of embodiments of the invention taken in conjunction with the accompanying drawings, wherein:
FIG. 1 is a cross-section of a self-contained sensordisposed as a film on a substrate constructed in accordance with an embodiment of the invention.
FIG. 2 is a cross-section of the self-contained sensor of FIG. 1 in contact with a test sample.
FIG. 3 is a cross-section of the self-contained sensor of FIG. 1 after contacting with the test sample resulting in a change in the optical property of the phosphate sensor.
FIG. 4 is a set of spectra at different phosphate concentrations for an embodiment of the self-contained sensor of FIG. 1 comprising h-PBMP-Zn-PCViolet Complex in Dowanol.
FIG. 5 is a set of spectra at different phosphate concentrations for an embodiment of the self-contained sensor of FIG. 1 comprising h-PBMP-Zn-PCViolet Complex in polymer matrix.
FIG. 6 is a calibration curve for an embodiment of the self-contained sensor of FIG. 1 comprising h-PBMP-Zn-PCViolet Complex in Dowanol, obtained by plotting absorbances at 650 nm as a function of phosphate concentration.
FIG. 7 is a set of spectra at different phosphate concentrations for an embodiment of the self-contained sensor of FIG. 1 comprising Azure C and molybdate salt in water.
FIG. 8 is a calibration curve for an embodiment of the self-contained sensor of FIG. 1 comprising Azure C and molybdate salt in water, obtained by plotting absorbances at 650 nm as a function of phosphate concentration.
FIG. 9 is a set of spectra at different phosphate concentrations for an embodiment of the self-contained sensor of FIG. 1 comprising Azure B and molybdate salt in water.
FIG. 10 is a calibration curve for an embodiment of the self-contained sensor of FIG. 1 comprising Azure B and molybdate salt in water showing blue-to-violet reaction, obtained by plotting absorbances at 650 nm as a function of phosphate concentration.
FIG. 11 is a calibration curve for an embodiment of the self-contained sensor of FIG. 1 comprising Brilliant Cresyl Blue and molybdate salt in water, obtained by plotting absorbances at 622 nm as a function of phosphate concentration.
FIG. 12 is a low-concentration calibration curve for an embodiment of the self-contained sensor of FIG. 1 comprising Azure B and molybdate salt in water, obtained by plotting absorbances at 650 nm as a function of phosphate concentration.
FIG. 13 is a set of spectra at different phosphate concentrations for an embodiment of the self-contained sensor of FIG. 1 comprising Azure B and molybdate salt in polymer matrix.
FIG. 14 is a calibration curve for an embodiment of the self-contained sensor of FIG. 1 comprising Azure B and molybdate salt in polymer matrix, obtained by plotting absorbances at 650 nm as a function of phosphate concentration.
FIG. 15 is a set of spectra at different phosphate concentrations for an embodiment of the self-contained sensor of FIG. 1 comprising Malachite Green and molybdate salt in polymer matrix.
FIG. 16 is a calibration curve for an embodiment of the self-contained sensor of FIG. 1 comprising Malachite Green and molybdate salt in polymer matrix, obtained by plotting absorbances at 650 nm as a function of phosphate concentration.
FIG. 17 is a set of spectra at different phosphate concentrations for an embodiment of the self-contained sensor of FIG. 1 comprising Basic Blue and molybdate salt in polymer matrix.
FIG. 18 is a calibration curve for an embodiment of the self-contained sensor of FIG. 1 comprising Basic Blue and molybdate salt in polymer matrix, obtained by plotting absorbances at 650 nm as a function of phosphate concentration.
FIG. 19 is a set of spectra at different phosphate concentrations for an embodiment of the self-contained sensor of FIG. 1 comprising Methylene Blue and molybdate salt in polymer matrix.
FIG. 20 is a calibration curve for an embodiment of the self-contained sensor of FIG. 1 comprising Methylene Blue and molybdate salt in polymer matrix, obtained by plotting absorbances at 650 mm as a function of phosphate concentration.
FIG. 21 is a set of spectra at different phosphate concentrations for an embodiment of the self-contained sensor of FIG. 1 comprising Basic Blue and molybdate salt in a plasticized polymer matrix.
FIG. 22 is a calibration curve for an embodiment of the self-contained sensor of FIG. 1 comprising Basic Blue and molybdate salt in a plasticized polymer matrix, obtained by plotting absorbances at 650 nm as a function of phosphate concentration.
FIG. 23 illustrates absorption spectra of a molybdate sensor film according to another embodiment of the invention at different molybdate concentrations;
FIG. 24 illustrates a response curve for the sensor film of FIG. 23;
FIG. 25 illustrates absorption spectra of a magnesium sensor according to another embodiment of the invention at different magnesium concentrations;
FIG. 26 illustrates a response curve for the sensor film of FIG. 25;
FIG. 27 illustrates absorption spectra of a hardness sensor according to another embodiment of the invention at different concentrations of magnesium;
FIG. 28 illustrates a response curve for the sensor film of FIG. 27;
FIG. 29 illustrates absorption spectra of a calcium sensor according to another embodiment of the invention at different calcium concentrations;
FIG. 30 illustrates a response curves for the sensor film of FIG. 29;
FIG. 31 illustrates absorption spectra of a sulfite sensor according to another embodiment of the invention at different sulfite concentrations;
FIG. 32 illustrates a response curve for the sensor film of FIG. 31;
FIG. 33 illustrates a typical set of spectra of a sulfite sensor according to another embodiment of the invention at different sulfite concentrations;
FIG. 34 shows a typical response curve for the sensor film of FIG. 33;
FIG. 35 illustrates a calibration curve for an alkalinity sensor;
FIG. 36 illustrates the improvement of sensitivity of response upon addition of increasing concentration of Nafion polymer in the pHEMA sensor film; and
FIG. 37 illustrates the improvement of FIG. 36 plotted as the sensor signal upon exposure to 2 ppm of chlorine demonstrating an existence of a critical non-intuitive region of concentration of Nafion in PHEMA where a maximum sensor response is obtained.

Corresponding reference characters indicate corresponding parts throughout the views of the drawings.

### DETAILED DESCRIPTION OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

Disclosed are improved sensor material compositions and methods for determining the concentration of chemical species in a sample at trace concentrations. Embodiments of the self-contained sensors described herein can be used either in aqueous or non-aqueous solution or as a solid-state device. Such self-contained sensors have the advantage that no post-addition reagents are required to determine analyte concentrations and the analyte determination test requires a minimal number of procedural steps. Moreover, self-contained sensors provide enhanced sensitivity and a faster response time. Embodiments of the invention also provide a method for determining chemical species concentrations in a test sample. The concentration in a test sample can be quantified using a calibration curve generated by testing samples with known concentrations.

In one aspect, the self-contained sensor is an optical sensor. Optical sensors possess a number of advantages over other sensor types, the most important being their wide range of transduction principles: optical sensors can respond to analytes for which other sensors are not available. Also, with optical sensors it is possible to perform not only "direct" analyte detection, in which the spectroscopic features of the analyte are measured, but also "indirect" analyte detection, in which a sensing reagent is employed. Upon interaction with the analyte species, such a reagent undergoes a change in its optical property, e.g. elastic or inelastic scattering, absorption, luminescence intensity, luminescence lifetime or polarization state. Significantly, this sort of indirect detection combines chemical selectivity with that offered by the spectroscopic measurement and can often overcome otherwise troublesome interference effects.

According to the invention, the sensor materials change their optical property in the ultraviolet (UV), visible, or near-infrared (IR) spectral range upon exposure to trace concentrations of the chemical species. The film is a polymer-based composition generally including a chemically sensitive analyte-specific reagent (for example, a fluorescent or colorimetric indicator), a polymer matrix or combination of polymer matrices, and auxiliary minor additives, wherein the film is produced from a solution of the components in a common solvent or solvent mixture. The analyte-specific reagent is immobilized within the polymer matrix to form the sensor film. Examples of additives are surfactants and internal buffers. Other additives can be also included. The polymers utilized in the sensor film are permeable to selected analytes where an analyte is a certain chemical species or class of chemical species detected by the sensor. The analyte-specific reagent undergoes changes in its optical properties (e.g., absorbance, fluorescence) as a function of analyte concentration. Desirably, the analyte-specific reagent undergoes the changes in its optical property outside the film where the change in response is not affected by the presence of interfering species as provided by the sensor formulation. Measurements are performed using ultraviolet/visible/near-IR detection systems known to those skilled in the art.

The desired response is achieved by tailoring the composition of the sensor film where the composition includes additional components in the film. For example, the desired sensor response is achieved by tailoring the oxidation potential of the immobilized analyte-specific reagent with selection of the polymer matrix components where the polymer matrix components are additional polymers. It is desired that the sensor film be self-contained so it does not have a need for auxiliary reagents outside the film.

In one embodiment, the above-mentioned self-contained sensors include an analyte-specific reagent and a pH-modifier. As used herein, "analyte-specific reagents" are compounds that exhibit change in colorimetric, photorefractive, photochromic, thermochromic, fluorescent, elastic scattering, inelastic scattering, polarization, and any other optical property useful for detecting physical, chemical and biological species. Analyte-specific reagents may include metal complexes or salts, organic and inorganic dyes or pigments, nanocrystals, nanoparticles, quantum dots, organic fluorophores, inorganic fluorophores, and their combinations thereof.

pH-Modifiers in the sensors serve as buffers and maintain the pH level of the sensor formulations at a constant pH which is preferable for the sensing mechanism. The choice of pH-modifiers depends upon the nature of the analyte-specific reagent used, but pH-modifiers may include acids, bases, or salts.

The self-contained sensors described herein may be used in solution or as solid-state devices. For application of the sensor as a solution, a common solvent is chosen for the different constituents of the sensor. Some examples of such a solvent include, but are not limited to, deionized water (DI water), 1-methoxy-2-propanol (Dowanol), ethanol, acetone, chloroform, toluene, xylene, benzene, isopropyl alcohol, 2-ethoxyethanol, 2-butoxyethanol, methylene chloride, tetrahydrofuran, ethylene glycol diacetate, and perfluoro(2-butyl tetrahydrofuran).

For application of the self-contained sensor as a solid-state device, the sensors described above are attached to or immobilized in a polymer matrix. The sensors are then disposed as a film on a substrate. It is to be appreciated that the polymeric material used to produce the sensor film may affect detection properties such as selectivity, sensitivity, and limit of detection. Thus, suitable materials for the sensor film are selected from polymeric materials capable of providing the desired response time, a desired permeability, desired solubility, degree of transparency and hardness, and other similar characteristics relevant to the material of interest to be analyzed.

The polymer matrix of the sensor film is preferably a plastic film, i.e., a resin film. The resin utilized to form the polymer support depends on the sensor applications. The resin is dissolved in the solvent so that the analyte-specific reagent becomes dispersed in the liquid medium. Alternatively, the analyte-specific reagent may be applied directly to an already formed plastic film. In one embodiment, a polymer film is made and a solvent is removed from the film by any known means such as evaporation, followed by the exposure of the dry film to a cocktail containing at least one reagent. In this way, a reagent is incorporated into the film. In one embodiment, the sensor film is prepared by coating a clear plastic surface with a thin layer of the chemical mixture and allowed to dry over a period of several hours in air the dark. The final film thickness is desirably between about 0.1 and about 200 microns, more preferably 0.5 - 100 microns and more preferably 1 - 50 microns.

For evaluation of response, the film is exposed to aqueous samples of analyte. Desirably, the amount of the aqueous sample of the analyte ranges between about 30 µL and about 50 µL of sample, however other amounts are contemplated without departing from the scope of the invention. Exposure time is desirably between about 0. 5 - 1000 seconds, more preferably 1 - 500 seconds, and more preferably 5 - 300 seconds. In one embodiment, the water sample is then removed before measurement of the sensor film. Alternately, the water sample can be present during the measurement. In one yet another embodiment, the measurement is done continuously before water exposure, during water exposure, and after water exposure. In a further embodiment, the measurement is done continuously before water exposure and during water exposure.

It is understood that the polymeric material used to produce the sensor film may affect the detection properties such as selectivity, sensitivity, and limit of detection. Thus, suitable materials for the sensor film are selected from polymeric materials capable of providing the desired response time, a desired permeability, desired solubility, degree of transparency and hardness, and other similar characteristics relevant to the material of interest. Suitable polymers which may be used as polymer supports in accordance with the present disclosure are hydrogels. As defined herein, a hydrogel is a three dimensional network of hydrophilic polymers which have been tied together to form water-swellable but water insoluble structures. The term hydrogel is to be applied to hydrophilic polymers in a dry state (xerogel) as well as in a wet state as described in U.S. Patent No. 5,744,794.

A number of different methods may be used to tie these hydrogels together. First, tying of hydrogels via radiation or free radical cross-linking of hydrophilic polymers may be utilized, examples being poly(hydroxyethylmethacrylates), poly(acrylic acids), poly(methacrylic acids), poly(glyceryl methacrylate), poly(vinyl alcohols), poly(ethylene oxides), poly(acrylamides), poly(N-acrylamides), poly(N,N-dimethylaminopropyl-N'-acrylamide), poly(ethylene imines), sodium/potassium poly(acrylates), polysaccharides, e.g. xanthates, alginates, guar gum, agarose etc., poly(vinyl pyrrolidone) and cellulose based derivatives. Second, tying via chemical cross-linking of hydrophilic polymers and monomers with appropriate polyfunctional monomers may be utilized, examples including poly(hydroxyethylmethacrylate) cross-linked with suitable agents such as N,N'-methylenebisacrylamide, polyethylene glycol diacrylate, triethylene glycol diacrylate, tetraethylene glycol dimethacrylate, tripropylene glycol diacrylate, pentaerythritol tetraacrylate, di-trimethylolpropane tetraacrylate, dipentaerythritol pentaacrylate, trimethylolpropane triacrylate, pentaerythritol triacrylate, propoxylated glyceryl triacrylate, ethoxylated pentaerythritol tetraacrylate, ethoxylated trimethylolpropane triacrylate, hexanediol diacrylate, hexanediol dimethacrylate and other di- and tri-acrylates and methacrylates; the copolymerisation of hydroxyethylmethacrylate monomer with dimethacrylate ester crosslinking agents; poly(ethylene oxide) based polyurethanes prepared through the reaction of hydroxyl-terminated poly(ethylene glycols) with polyisocyanates or by the reaction with diisocyanates in the presence of polyfunctional monomers such as triols; and cellulose derivates cross-linked with dialdehydes, diepoxides and polybasic acids. Third, tying via incorporation of hydrophilic monomers and polymers into block and graft copolymers, examples being block and graft copolymers of poly(ethylene oxide) with suitable polymers such as poly(ethyleneglycol) (PEG), acrylic acid (AA), poly(vinyl pyrrolidone), poly(vinyl acetate), poly(vinyl alcohol), N,N-dimethylaminoethyl methacrylate, poly(acrylamide-co-methyl methacrylate), poly(N-isopropylacrylamide), poly(hydroxypropyl methacrylate-co-N,N-dimethylaminoethyl methacrylate); poly(vinyl pyrrolidone)-co-polystyrene copolymers; poly(vinyl pyrrolidone)-co-vinyl alcohol copolymers; polyurethanes; polyurethaneureas; polyurethaneureas based on poly(ethylene oxide); polyurethaneureas and poly(acrylonitrile)-co-poly(acrylic acid) copolymers; and a variety of derivatives of poly(acrylonitriles), poly(vinyl alcohols) and poly(acrylic acids). Molecular complex formation may also occur between hydrophilic polymers and other polymers, examples being poly(ethylene oxides) hydrogel complexes with poly(acrylic acids) and poly(methacrylic acids). Last, tying via entanglement cross-linking of high molecular weight hydrophilic polymers, examples being hydrogels based on high molecular weight poly(ethylene oxides) admixed with polyfunctional acrylic or vinyl monomers.

As noted above, copolymers or co-polycondensates of monomeric constituents of the above-mentioned polymers, and blends of the foregoing polymers, may also be utilized. Examples of applications of these materials are in Michie, et al., "Distributed pH and water detection using fiber-optic sensors and hydrogels," J. Lightwave Technol. 1995, 13, 1415-1420; Bownass, et al., "Serially multiplexed point sensor for the detection of high humidity in passive optical networks," Opt. Lett. 1997, 22, 346-348; and U. S. Patent No. 5,744,794.

As set forth above, the hydrogel making up the polymer matrix is dissolved in a suitable solvent including, but not limited to di(ethylene glycol) methyl ether and ethylene glycol phenyl ether, 1-methoxy-2-propanol, ethanol, acetone, chloroform, toluene, xylene, benzene, isopropyl alcohol, 2-ethoxyethanol, 2-butoxyethanol, methylene chloride, tetrahydrofuran, ethylene glycol diacetate, and perfluoro(2-butyl tetrahydrofuran). Generally, the concentration of the solvent in the solution containing the resin is about 70 weight percent or greater, with about 75 weight percent to about 90 weight percent being desirable and about 80 weight percent being preferred. One preferred hydrogel that will be used for exemplary purposes below is poly(2-hydroxyethylmethacrylate) (pHEMA) dissolved in a solvent including of 1-methoxy-2-propanol.

The polymer matrix of the sensor film is preferably permeable to selected analytes. The sensor film may be selectively permeable to analytes on the basis of size (i.e., molecular weight); hydrophobic/hydrophilic properties; phase (i.e., whether the analyte is a liquid, gas or solid); solubility; ion charge; the ability to inhibit diffusion of colloidal or particulate material; or the composition of the water sample besides the analyte itself (for example, pH of the sample during measurements of calcium).

The analyte-specific reagents are incorporated into or applied to the polymer matrix to produce the sensor film. Materials utilized as analyte-specific reagents incorporate dyes and reagents known in the art as indicators. As used herein, "analyte-specific reagents" are indicators that exhibit colorimetric, photorefractive, photochromic, thermochromic, fluorescent, elastic scattering, inelastic scattering, polarization, or any other optical property useful for detecting physical, chemical and biological species. Analyte-specific reagents include organic and inorganic dyes and pigments, nanocrystals, nanoparticles, quantum dots, organic fluorophores, inorganic fluorophores and similar materials.

Examples of compounds which can be used as analyte-specific reagents include organic dyes, organic fluorophores, fluorescent dyes, IR absorbing dyes, UV absorbing dyes, photochromic dyes, thermochromic dyes, sulphonephthalein dyes, and other known dyes that may be used for this purpose. Specific examples of dyes include bromopyrogallol red, xylidyl blue I, chlorophosphonazo III, brilliant green, xanthene dyes such as rhodamine B, rhodamine 6G, eosine, phloxine B and the like, acridine dyes such as acridine orange, acridine red and the like, azo dyes such as ethyl red, methyl red and the like, porphyrin dyes, phthalocyanine dyes, cyanine dyes such as 3,3'-diethylthiacarbocyanine iodide, 3,3'-diethyloxadicarbocyanine iodide and the like, merocyanine dyes, styryl dyes, oxonol dyes, triarylmethane dyes, methylene blue, phenol blue and the like. Other dyes including pH sensitive dyes such as bromothymol blue and bromocresol green may similarly be used. Fluorescent materials which may be used as analyte-specific reagents bond to specific predetermined locations on the sensor film and fluoresce when excited by a specific optical wavelength. Appropriate wavelengths range from about 200 nm to about 1100 nm, more preferably from about 300 nm to about 1000 nm, with a range of from about 350 nm to about 950 nm being most preferred. In other embodiments, non-fluorescing analyte-specific reagents that bond to specific predetermined locations may be used. Such reagents include light absorbing materials such as near infrared (NIR) absorbing materials. Examples of NIR absorbing materials include carbon black and Poly(styrenesulfonate)/poly(2,3-dihydrothieno(3,4-b)-1,4-dioxin). In one embodiment, the analyte-specific reagent is a light absorbing reagent absorbing light at about 620 - 670 nm. In another embodiment, the analyte-specific reagent is a light absorbing reagent absorbing light at about 750 - 820 nm. In another embodiment, the analyte-specific reagent is a light absorbing reagent absorbing light at about 380 - 420 nm.. These dyes may be used singly or in combination depending on the desired application. The choice of organic compound and amount utilized for a given application depends on the properties of the organic compound and the purpose for which it will be used. For instance, fluorescent dyes may be added to a resin binder at part-per-million concentrations as is known in the art.

In one embodiment of the invention, the analyte-specific reagent is immobilized in the hydrogel matrix by forming an ion pair between the analyte-specific reagent and a lipophilic counter ion, such as a quaternary ammonium ion. It is known that quaternary ammonium ions may cause a change in the absorption spectra of analyte-specific reagents. However, it was unexpectedly discovered that the addition of quaternary ammonium ions, in concentrations substantially higher than the stoichiometric amount required to ion pair an analyte-specific reagent, produced a very significant improvement in the indicator selectivity and sensitivity. As used herein, concentrations substantially higher than the stoichiometric amount required to ion pair means the quaternary ammonium ions are added in a concentration of between about 5-1000 times greater than stoichiometric amounts relative to the indicator. By means of example and not by way of limitation, it has been determined that a preferred molar ratio of 285:1 (quaternary ammonium ion:indicator) is desirable for a particular molybdate sensor. By comparison, an optimum molar ratio of 18:1 was determined for a sulfite sensor. Without being limited to any particular explanation, it is currently believed that the physical change that occurs when amounts of quaternary ammonium ions greater than the critical micelle concentration are present in the film is the formation of micelles that bind more than a single indicator-analyte complex at its surface. Ligand-metal ratios greater than unity are thus formed in the presence of cationic micelles and can lead to enhancements in expected ultraviolet-visible-near-IR spectroscopy responses of the indicator-analyte.

One example of an ion pair to be used below for exemplary purposes and not by way of limitation is Bromopyrogallol Red (BR) and benzyldimethyltetradecylammonium chloride (Zephiramine) for the BP Red-MoO₄ indicator system. The presence of quaternary ammonium salts has been shown to induce a significant bathochromic shift of the BP Red-Mo chelate absorption maximum, as well as intensification of the chelate absorption band. The quaternary ammonium salt used in this film was chosen with respect to structure and mass to achieve a shift in a position of peak absorption (λₘₐₓ) to longer wavelengths. Table 1 lists the λₘₐₓ produced by selected quaternary ammonium salts on pHEMA film when wetted.

**Table 1. Effect of Quaternary Ammonium and Phosphonium Salt on λₘₐₓ of pHEMA film when wetted with water**

| Quaternary ammonium salt | λmax (nm) |
|---|---|
| Zephiramine(tetradecyldimethylbenzylammonium chloride) | 620 |
| TBAB (tetrabutylammonium bromide) | 615 |
| TBPB (tetra butylphosophonium bromide) | 613 |

The addition of quaternary ammonium salt in concentrations significantly higher than that required to ion pair produced a very significant improvement in the indicator selectivity and sensitivity. A significant absorbance shift, desirably between about 10 nm and about 30 nm, and more desirably about 20 nm, in λmax to higher wavelength was observed when the quaternary ammonium salts were added in greater than stoichiometric amounts relative to the dye. This shift enables significant improvement in detection sensitivity when the film is measured at a wavelength near the λmax. Desirably, the measured wavelength is within about 1 - 80 nm of λmax. Without being limited to any specific reason, the effect is believed to be the result of the formation of the BP Red-MoO₄ chelate of higher order (e.g., higher ligand: metal ratio) on the interface of cationic micelle.

In another embodiment of the invention, multiple transparent hydrogel films are prepared that contain a chemical composition that changes color after being exposed to the sample solution to obtain a quantitative measurement of the sample solution. In one example of this embodiment, multiple films are prepared to be used to determine the alkalinity of the sample solution, and desirably contain a chemical composition that changes color after being exposed to alkaline species in the sample solution. Desirably, between about 2 and 12 transparent films, and more preferably between 2 and 8 transparent films are prepared and are exposed to the sample solution.

In one embodiment, the chemical composition added in the hydrogel films comprises a pH indicator, a surfactant, and an acid. Suitable surfactants include quaternary ammonium salt such as cetyltrimethylammonium bromide, tridodecylmethylammonium chloride, tetrabutylammonium bromide, and many others. Desirably, the surfactant reduces or substantially eliminates the amount of indicator leaching in the film. Without the surfactant, indicator leaching will introduce undesirable errors in absorbance measurement. Suitable pH indicator dyes include bromoscresol green and bromophenol blue. It is desirable that the pH indicator dye have a pKa value near 4.3.

According to the method disclosed in this embodiment, the multiple hydrogel films in this embodiment each contain a different amount of acid. Some suitable acids are carboxylic acids and aryl- and alkylsulfonic acids such as p-toluenesulfonic acid, however any acid that can be dissolved in the hydrogel media may be used. The acid concentration in each film is different and varies from film to film by a predetermined pattern. The acid concentrations desirably vary between about 0.2 and 50 wt% relative to dry pHEMA (hydrogel). Preferably, the film having the lowest concentration has a concentration between about 0.2 and 20 wt%, and more desirably between about 0.8 and 10 wt%. Preferably, the film having the highest concentration has a concentration between about 20 and 50 wt%, and more desirably between about 25 and 35 wt%. The number of films that are needed to cover a given alkalinity range if a weak acid such as a carboxylic acid is used is fewer than that if a strong acid is used. This is because the weak acid exhibits a flatter titration curve than the strong acid. However, weak acids usually form complexes with ions such as calcium ions that commonly exist in water samples.

When a given amount of sample solution is deposited on the hydrogel films, alkaline species in the sample neutralize the acid added. Since an acid concentration gradient is created by addition of different amount of acid in the film series, a profile of color change is resulted in when the film series (multiple films) is (are) exposed to the sample solution, corresponding to different degree of neutralization. Average absorbance of all the films in the series is used for quantitative determination of sample alkalinity.

In one aspect, such as for a phosphate sensor, the self-contained sensor includes a molybdate salt and a dye as the analyte-specific reagent and a sulfonic acid as the pH-modifier. The molybdate salt may be any of the various soluble salts commercially available and compatible with the other constituents. Examples of suitable molybdate salts that may be used include, but are not limited, to ammonium, sodium, potassium, calcium and lithium molybdates. In another aspect, ammonium heptamolybdate is used as a molybdate salt.

The dye is a chromogenic indicator, which shows a change in the optical property of the sensor, after contacting the dye with the molybdate salt and the phosphate. Some examples of suitable dyes that may be employed in the analyte-specific reagents include azo dyes, oxazine dyes, thiazine dyes, triphenylmethane dyes, and any combinations thereof. In one aspect, the analyte-specific reagent includes thiazine or oxazine dyes. Some specific examples of thiazine and oxazine dyes that may be used include, but are not limited to, Azure A, Azure B, Basic Blue, Methylene Blue, and Brilliant Cresyl Blue.

Thiazine and oxazine dyes are used because the main absorption band in the spectra of most thiazine and oxazine dyes in the range of 400 nm to 800 nm does not undergo any significant change when the test solution pH is adjusted from 3 to 0.5. This is in contrast to the triphenylmethane dye known in the art for phosphate analysis. The aqueous solutions of the triphenylmethane dyes undergo a color transition in the pH range of 0 to 2, exhibiting an intense color with an absorption maximum ranged from 550 nm to 650nm at neutral pH and much less color or colorless at low pH. Because the absorption band of the triphenylmethane dye solution at neutral pH usually overlaps with that of the dye-HPA complex, pH of the test media for phosphate determination must be controlled below the transition pH of the dye in order to reveal the absorbance change due to formation of the dye-HPA complex. Thus, strong acids are required with triphenylmethane dyes and molybdate salts. Thiazine and oxazine dyes on the other hand do not require very strong acidic conditions to suppress dye color. In fact, low concentrations of low-acidity pH-modifiers are able to bring about the color change in this case.

As noted, a sulfonic acid may be used as a pH-modifier in the self-contained sensor described herein. Suitable sulfonic acids are selected such that the pH of the sensor formulation is in the range from about 0.5 to 3. In one aspect para-toluenesulfonic acid is used as a pH-modifier. The concentration of the sulfonic acid is selected such that the color transition of the dye occurs, or a change in absorbance occurs, on contacting with the molybdate salt and the phosphate.

For example, when the thiazine and oxazine dyes are mixed with molybdate in an aqueous solution in which the hydrogen ion to molybdate concentration ratio is less than 30, a significant red shift of the main absorption band of the dyes is observed. Upon addition of phosphate to the solution, the solution turns blue. On the other hand, when the thiazine or oxazine dye is mixed with molybdate in an aqueous solution in which the hydrogen ion to molybdate concentration ratio is kept in the range between 30 and 120, the main absorption band of the dye remains the same and no red shift is observed. In this case, the main absorption band decreases upon addition of phosphate to the test solution. The decrease in absorbance is proportional to the phosphate concentration.

In one aspect, the ratio of the hydrogen ion concentration to molybdate concentration is in the range from about 0.1 to about 150, while in another aspect, the ratio of the hydrogen ion concentration to molybdate concentration is in the range from about 1 to about 120, and in a further aspect, the ratio of the hydrogen ion concentration to molybdate concentration is in the range from about 30 to about 120.

In a further aspect, the self-contained sensor described herein, includes at least one additive from the group of polyethylene glycols, polypropylene glycols, polyoxyethylene alkyl ethers, polyvinyl alcohols, or any combinations thereof The above additives facilitate the solubilization of the analyte-specific reagents and the dyes and also deter the formation of phosphomolybdate-dye aggregates. Thus, by addition of the above additives, precipitation of the phosphomolybdate-dye species resulting in signal loss may be prevented. Additionally, when the self-contained sensors are immobilized in a polymer matrix, the above compounds may function as plasticizers and may aid in enhancing the permeability of the polymer matrix to the analyte species (phosphate in this case).

In one aspect, polyethylene glycol is used as an additive to the self-contained sensor. In one aspect, molecular weight of the polyethylene glycol additive is in the range from about 100 g/mol to about 10,000 g/mol, while in another aspect, molecular weight of the polyethylene glycol is in the range from about 200 g/mol to about 4000 g/mol, and in a further aspect, molecular weight of the polyethylene glycol is in the range from about 400 g/mol to about 600 g/mol. In one aspect, the weight fraction of the polyethylene glycol additive to the sensor formulation is in the range from about 0.1 wt% to about 20 wt%, while in another aspect, the weight fraction of the polyethylene glycol additive to the sensor formulation is in the range from about 0.5 wt% to about 10 wt%, and in a further aspect, the weight fraction of the polyethylene glycol additive to the sensor formulation is in the range from about 1 wt% to about 5 wt%.

In a further aspect, the self-contained sensor described herein includes a signal enhancer. The signal enhancer may be formed of the same material as the pH-modifier or may be formed of a different material. Signal enhancers may be used to mask free isopolymolybdates that are to be distinguished from phosphomolybdate species. If not masked, the free isopolymolydbates may ion pair with the dyes resulting in a higher background signal or reduced signal due to phosphate alone. Examples of a suitable signal enhancer include, but are not limited to, oxalic acids, sulfonic acids, oxalates, sulfonates, and any combinations thereof.

In one aspect, the analyte-specific reagent includes a metal complex and a dye. The metal complex is selected such that it has high specificity to the analyte (phosphate in this case). Examples of suitable metal complexes that can be used include zinc complexes and cobalt complexes. The above metal complex further includes at least one ligand capable of coordinating with the metal cation. The metal ligand complex is chosen such that it provides some geometrical preferences resulting in selective binding of anions of a particular shape. Examples of suitable ligands include pyridines, amines and any other nitrogen containing ligands. In one embodiment, a dinuclear zinc complex of (2,6-Bis(bis(2-pyridylmethyl)aminomethyl)-4-methylphenol) ligand was employed as the analyte-specific reagent.

Metalochromic dyes are used along with the metal complexes. Some examples of metalochromic dyes that can be used with the metal complexes include catechol dyes, triphenylmethane dyes, thiazine dyes, oxazine dyes, anthracene dyes, azo dyes, phthalocyanine dyes, and any combinations thereof. Some specific examples of metalochromic dyes include, but are not limited to, pyrocatechol violet, Murexide, Arsenazo I, Arsenazo III, Antipyrylazo III, Azo1, Acid Chrome Dark Blue K, BATA (bis-aminopehnoxy tetracetic acid), Chromotropic acid, and XB-I (3-[3-(2,4-dimethylphenylcarbamoyl)-2-hydroxynaphthalen]-1-yl-azo]-4-hydroxybenzene sulfonic acid, sodium salt.

The pH-modifier for the analyte-specific reagent comprising a metal complex and a metalochromic dye is selected such that the pH of the sensor formulation is maintained at pH=7. Examples of suitable pH-modifiers include biological buffers such as Good's buffers or amines. An example of biological buffer which may be used includes, but is not limited to, HEPES (2-[4-(2-hydroxyethyl)-1-piperazinyl]ethanesulfonic acid). Examples of suitable amines include, but are not limited to, cycloamines or more specifically cyclohexylamines. The concentration of the pH-modifier is selected such that the color transition of the dye occurs, or a change in absorbance occurs, on contact with the metal complex and the dye.

In one aspect, the self-contained sensor includes a metal complex, a dye and a sulfonic acid pH-modifier, which are dissolved in a non-aqueous solvent. In another aspect, the self-contained sensor includes a metal complex, a dye and an amine pH-modifier, which are immobilized in a polymer matrix to form a solid-state device.

The polymer matrix of the sensor film is permeable to selected analytes. The sensor film may be selectively permeable to analytes on the basis of size, i.e., molecular weight; hydrophobic/hydrophilic properties; phase, i.e., whether the analyte is a liquid, gas or solid; solubility; ion charge; or, the ability to inhibit diffusion of colloidal or particulate material. In one aspect, additives such as polyethylene glycols, polypropylene glycols, polyoxyethylene alkyl ethers, polyvinyl alcohols, or any combinations thereof may be added to the self-contained sensors. These additives may aid in enhancing the permeability of the polymer matrix to the analyte species (phosphate in this case) by plasticizing the polymer matrix.

The sensor film described herein may be self-standing or further disposed on a substrate such as glass, plastic, paper or metal. The sensor film may be applied or disposed on the substrate using any techniques known to those skilled in the art, for example, painting, spraying, spin-coating, dipping, screen-printing and the like. In one aspect, the polymer matrix is dissolved in a common solvent for the analyte-specific reagent and the pH-modifier and then dip-coated onto a clear plastic surface to form a thin layer which is then allowed to dry over a period of several hours in the dark. Alternatively, the analyte-specific reagent may be applied directly to a preformed polymer film.

The concentration of the solution used to coat the surface of the substrate is kept low, for example, in the range from about 20 wt% solids to about 30 wt% solids, so as to not adversely affect the thickness of the film and its optical properties. In one aspect, the thickness of the film is the range from about 1 micron to about 60 microns, in another aspect, the thickness of the film is in the range from about 2 microns to about 40 microns, in another embodiment, the thickness of the film is in the range from about 5 microns to about 20 microns.

In one aspect, the analyte-specific reagent is attached to or incorporated into a sensor film, which is then disposed on an optical media disc such as a CD or a DVD.

In another aspect, the analyte-specific reagent on the sensor film forms sensor spots when applied to the optical storage media substrate. As used herein, "sensor spots" and "sensor regions" are used interchangeably to describe sensor materials placed on the surface, or in an indentation placed in the surface but not penetrating the region containing the digital information, of an optical storage media at predetermined spatial locations for sensing using an optical storage media drive. Depending on the application, the sensor spots are responsive to physical, chemical, biochemical, and other changes in the environment. In some aspects, the sensor film applied to the optical storage media may be subjected to treatment to form these sensor spots. Methods for such application are known to those skilled in the art and may include physical masking systems and both negative and positive photoresist applications. Alternatively, once the optical storage media has been coated with a polymer film, the analyte specific reagent and pH-modifier may be applied as sensor spots to the optical storage media article.

The sensor is then used to qualitatively and quantitatively analyze the presence of the chemical species in an aqueous test sample. In one aspect, a method of determining the concentration in a test sample includes contacting a test sample with the self-contained sensor described herein, measuring a change in an optical property of the self-contained sensor produced by contacting the test sample with the self-contained phosphate-sensor, and converting the change in optical property to the concentration.

Contacting of the sensor with the test sample may be carried out by any suitable mechanism or technique depending upon whether the sensor is in solution or in solid-state. Some examples by which contacting may occur include, but are not limited to, mixing a solution of the sensor with a test sample solution, by dipping a strip of the sensor in a test-sample solution, by spotting a sensor film with a test sample solution, by flowing a test sample through a testing device having a sensor, and the like.

After contacting, a change in the optical property of the sensor is optically measured. The change in the optical property may be simply qualitative such as a change in color of the sensor. Alternatively, the change may be quantitative, for example, change in elastic or inelastic scattering, absorption, luminescence intensity, luminescence lifetime or polarization state. By way of example, when a sensor having ammonium molybdate, a thiazine dye such as Azure C, and para-toluenesulfonic acid is contacted with a sample, the color of the sensor changes from violet to blue and a change in the absorption peak at 650 nm occurs. By measuring the change (increase or decrease) in the absorption peak, the concentration can be determined.

In one embodiment, measurements of optical response can be performed using an optical system that included a white light source (such as a Tungsten lamp available from Ocean Optics, Inc. of Dunedin, FL) and a portable spectrometer (such as Model ST2000 available from Ocean Optics, Inc. of Dunedin, FL). The spectrometer is equipped with a 600-grooves/mm grating blazed at 400 nm and a linear CCD-array detector. Desirably, the spectrometer covers the spectral range from 250 to 800 nm and to 1100 nm with efficiency greater than 30%. Light from the lamp is focused into one of the arms of a "six-around-one" bifurcated fiber-optic reflection probe (such as Model R400-7-UV/VIS available from Ocean Optics, Inc. of Dunedin, FL). The common arm of the probe illuminates the sensor material. The second arm of the probe is coupled to the spectrometer. For fluorescence measurements light from a source is prefiltered to select an excitation wavelength of interest. Fluorescence emission is collected with the same setup but including an emission long-pass filter. Other known methods of measuring the response may also be used.

After measuring the change in the optical property, the concentration in the sample can be determined by converting the change in the optical property to the phosphate concentration. This converting may be carried out using a calibration curve. The calibration curve may be generated by measuring changes in an optical property of a sensor after contacting with test samples of known concentrations. After the calibration curve is generated, the concentration in an unknown test sample may be determined by using the calibration curve. In one aspect, the change in absorbance of the sensor after contacting with a test sample is directly proportional to the concentration. The self-contained sensors of embodiments of the invention may be used for sensing chemical species in a broad concentration range.

The films may be prepared by depositing the polymer solution into wells on a glass slide or other suitable method known to those skilled in the art. In one example, the wells may be created with a die-cut, adhesive-backed polymer mask layer. The films are then exposed to a fixed amount of the sample solution. After the films are exposed, the absorbance of each film is measured using known methods at a wavelength near or at the maximum absorbance peak of the indicator. The average absorbance measured from the sensor films is used to quantify the alkalinity of the sample. This method is based on absorbance measurement and it will still work even if all of films change color. Further, in addition to colorimetric measurements, fluorescence and other optical measurements are possible.

In another embodiment of the invention, we unexpectedly discovered that an addition of a certain polymer as an additive (or blend) to a polymer formulation, provides an enhancement of signal if this additive is at a certain concentration. Above and below this concentration, the effect is diminished. This effect was discovered in the application of dye 2-[2-[3-[(1,3-Dihydro-3,3-dimethyl-1-propyl-2H-indol-2-ylidene)ethylidene]-2-phenoxy-1-cyclohexen-1-yl]ethenyl]-3,3-dimethyl-1-propylindolium perchlorate known as IR 768 perchlorate. The addition of Nafion resulted in the improvement of the relative response of the sensor film when sensor signal change is normalized by the remaining absorbance at highest tested concentration.

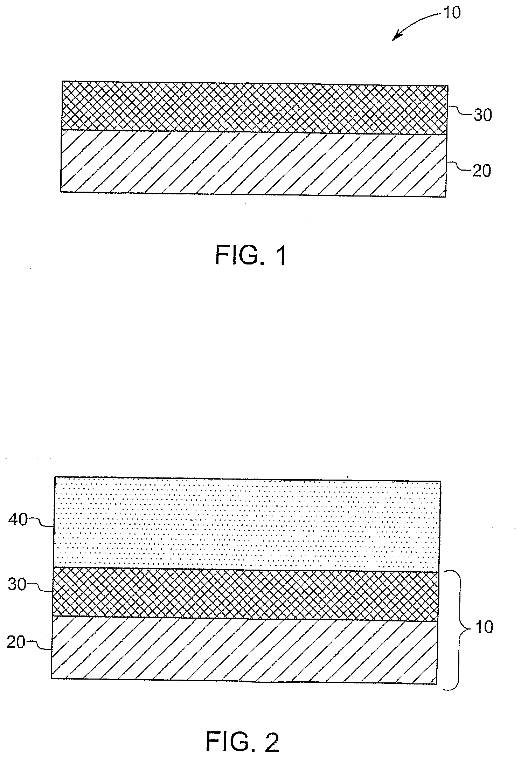

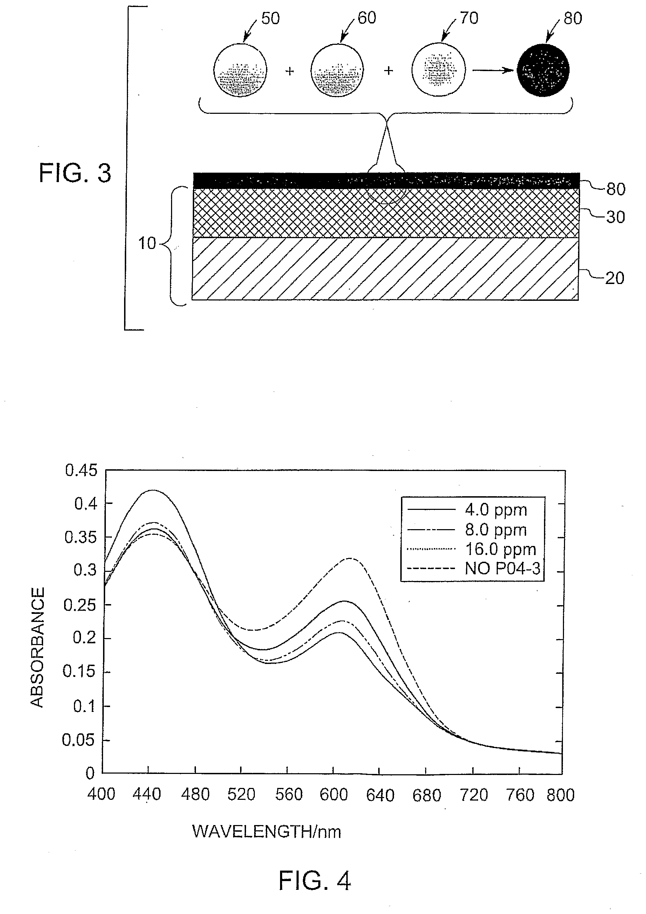

A method of determining concentrations by using the self-contained sensor may be further described by referring to the accompanying figures. FIG. 1 is a cross-section of a self-contained sensor 10 disposed as a film 30 on a substrate 20. The film 30 includes an analyte-specific reagent 50 and a pH-modifier 60 (FIG. 3). The analyte-specific reagent 50 may includes a molybdenum salt or metal complex and a dye.

FIG. 2 is a cross-section of the self-contained sensor 10 in contact with a test sample 40. A method for contacting the sensor 10 with the test sample 40 may occur by any conventional means known to those skilled in the art and whole or part of the sensor 10 may be in contact with the test sample 40.

FIG. 3 is a cross-section of the self-contained sensor 10 after contacting with the test sample 40 resulting in a change in the optical property of the sensor 80. Further, FIG. 3 depicts an enlarged portion of the change in optical property brought about by contacting the analyte-specific reagent 50 and pH-modifier 60 with a specimen to be tested 70.

Applications of the self-contained sensors 10 may include, but are not limited to, analysis of substances in the water treatment industry, in environmental monitoring, in clinic diagnosis, and in other industrial places such as mining and metallurgical processes.

The present disclosure will now be described more specifically with reference to the following examples. It is to be noted that the following examples are presented herein for purpose of illustration and description; they are not intended to be exhaustive or to limit the disclosure to the precise form disclosed.

### EXAMPLE 1. PHOSPHATE SENSOR

In the following tests, the reaction products were analyzed using 1H NMR Spectroscopy, gas chromatography mass spectrometry (GC/MS), and fast atom bombardment spectrometry (FAB). The sensor device response was measured using an OceanOptrics spectrophotometer equipped with a fiber-optic probe. The probe was oriented at an angle in the range from about 45° to about 90° with respect to the device.

### TEST 1. Synthesis of h-BPMP (2,6-Bis(bis(2-pyridylmethyl)aminomethyl)-4-methylphenol)

Synthesis of h-BPMP was conducted according to the Scheme 1. The 2,6-bis(hydroxymethyl)-4-methylphenol (A in Scheme1) was chlorinated using thionyl chloride in dichloromethane ion 85% yield. The product 2,6-bis(chloromethyl)-4-methylphenol (B in Scheme 1) was exposed to the bispyridine amine to produce the ligand (C in Scheme 1) in 70% yield.

Synthesis of 2,6-bis(chloromethyl)-4-methylphenol: A suspension of the 2,6-bis(hydroxymethyl)-4-methylphenol in 25 mL dichloromethane (DCM) was added to a solution of thionyl chloride in 50 mL DCM. After the addition the mixture was stirred for 10 min. Rapidly a reaction took place dissolving all solids. The amber solution was stirred for 48 hours. The reaction was poured into 100 g ice and the water layer neutralized to pH = 7 with NaOH. The organic materials were separated and the aqueous layer extracted with 3 x 50 mL DCM. The combined organic layers were dried with MS, filtered and evaporated to dryness. This gave 5.2 g (85%) of material B, an amber oil. ₁H NMR indicated product formation of about 90%. GCMS showed the correct molecular ion peak (M+) at 205 m/z. The crude product of the above reaction was used as is for the next step. The unstable product was used within the next 24 hours.

Synthesis of h-BPMP: The 2,6-bis(chloromethyl)-4-methylphenol was dissolved in 15 mL THF and treated under N2 with a solution of the bis(2-pyridine) amine and the triethylamine in 5 mL THF. Addition was performed at 0°C for 1 hour. The final suspension was stirred for 48 hours, filtered and concentrated under reduced pressure. The residue was treated with water 20 mL and extracted with DCM (3 x 30 mL). The organic materials were dry filtered and evaporated. The residue was chromatographed in SiO₂ eluting with acetone. This gave 1.71 (70%) g of material C as an amber solid. FAB: showed the correct molecular ion peak (M+) at 531 m/z. ₁H NMR agreed to the correct product.

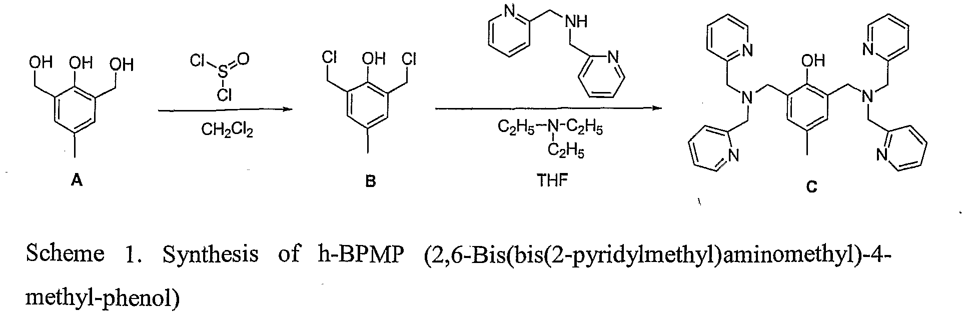

In the following examples, preparation and testing of self-contained phosphate sensors as described in some embodiments will be further illustrated. Scheme 2 illustrates the mechanism of sensing phosphate in an aqueous test sample as described in Examples 2 and 3. Scheme 3 illustrates the mechanism of testing phosphate in an aqueous test sample as described in Examples 4 to 14.

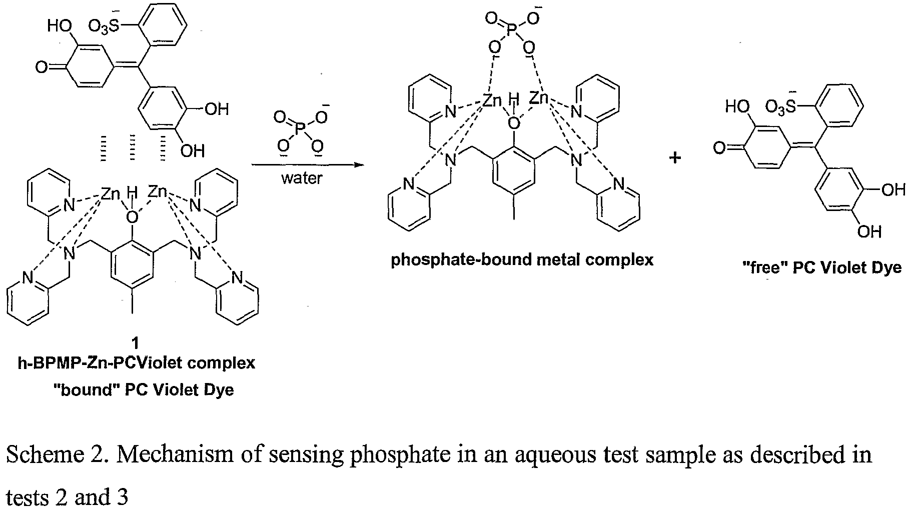

### TEST 2. Preparation and testing of sensor comprising h-PBMP-Zn-PCViolet Complex in Dowanol

Three base solutions were prepared in 100 mL Dowanol: A) ZnBr (FW 145.3), 7.7 mg, 0.053 mmol; B) h-BPMP (FW=530), 28 mg, 0.053 mmol; and C) PCViolet (FW 408.4), 21.5 mg, 0.053 mmol. To an aliquot of 1.0 mL of A was added 1.0 mL of B followed by 1.0 mL of C. To this mixture was added pH = 7 solution of 2-[4-(2-hydroxyethyl)-1-piperazinyl]ethanesulfonic acid (HEPES) in Dowanol obtaining a greenish-blue colored solution. A 1.0 mL aliquot solution was diluted with 2 mL Dowanol and exposed to the aqueous PO₄⁻³ solution at pH=6.9 using DI water pH=6.9 as standard with 3 min exposure. UV-Vis spectra were recorded between 400 - 900 nm.

FIG. 4 shows a typical set of spectra at different phosphate concentrations for the described device.

### TEST 3. Preparation and testing of sensor comprising h-PBMP-Zn-PCViolet Complex in polymer matrix.

Three base solutions were prepared in 100 mL Dowanol: A) ZnBr (FW 145.3), 7.7 mg, 0.053 mmol; B) h-BPMP (FW=530), 28 mg, 0.053 mmol; and C) PCViolet (FW 408.4), 21.5 mg, 0.053 mmol. To an aliquot of 0.6 mL of A was added 0.6 mL of B followed by 0.6 mL of C. To this mixture was added 1.8 mL of 20% pMMA/pHEMA (1:3) in Dowanol and 3 % by weight of dicyclohexylamine obtaining a greenish-blue colored solution. A 5 x 10 cm polycarbonate sheet (0.5 mm thickness) was coated (using two 3M Scotch Magic tapes film thickness or ∼12 microns) with the above solution. The above coated sheet was air-dried for 2 h and exposed to the aqueous PO₄⁻³ solution at pH=6.9 using DI water pH=6.9 as standard with 3 to 5 min exposure. Film reading was done using an Ocean Optics spectrophotometer between 400 - 900 in a 45° or 90° angle using polycarbonate over white paper as background.

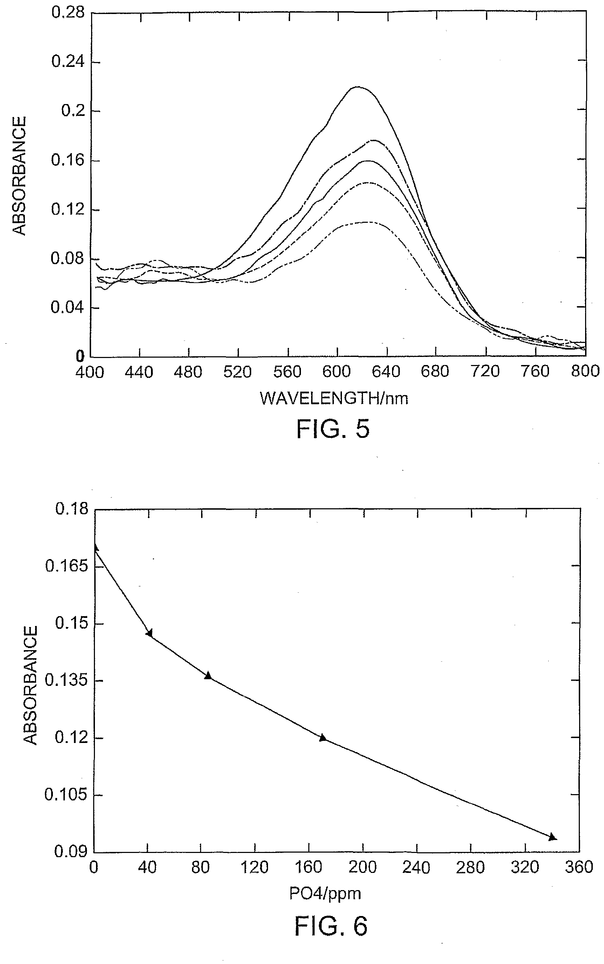

FIG. 5 shows a typical set of spectra at different phosphate concentrations for the described device. FIG. 6 shows the calibration curve for the described device obtained by plotting absorbances at 650 nm as a function of phosphate concentration.

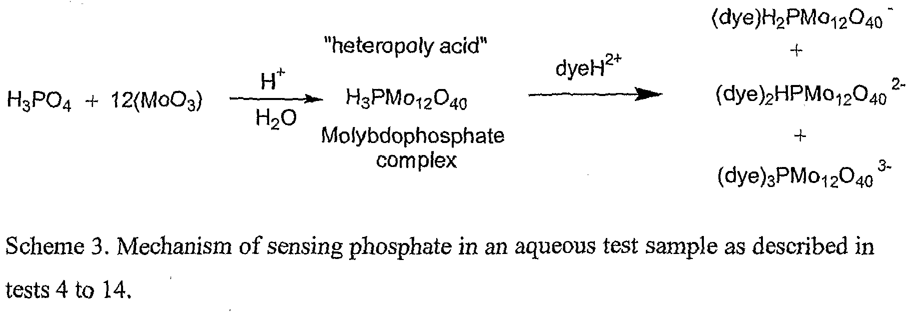

### TEST 4. Preparation and testing of sensor comprising Azure C and molybdate salt in water: violet-to-blue reaction.

p-Toluenesulfonic acid (TsOH), ammonium molybdate and Azure C were dissolved in DI (deionized) water at required concentrations. A 2 mL solution of 0.05 M TsOH was mixed with 0.25 mL of 0.068 M ammonium molybdate solution followed by 0.1 mL of Azure C solution (10 mg in 10 mL water, Aldrich 242187) in a 1-cm disposable cuvette. About 0.5 mL of aqueous samples of phosphate at different concentrations was added to the above solution. UV-Vis spectra were recorded between 400 - 900 nm.

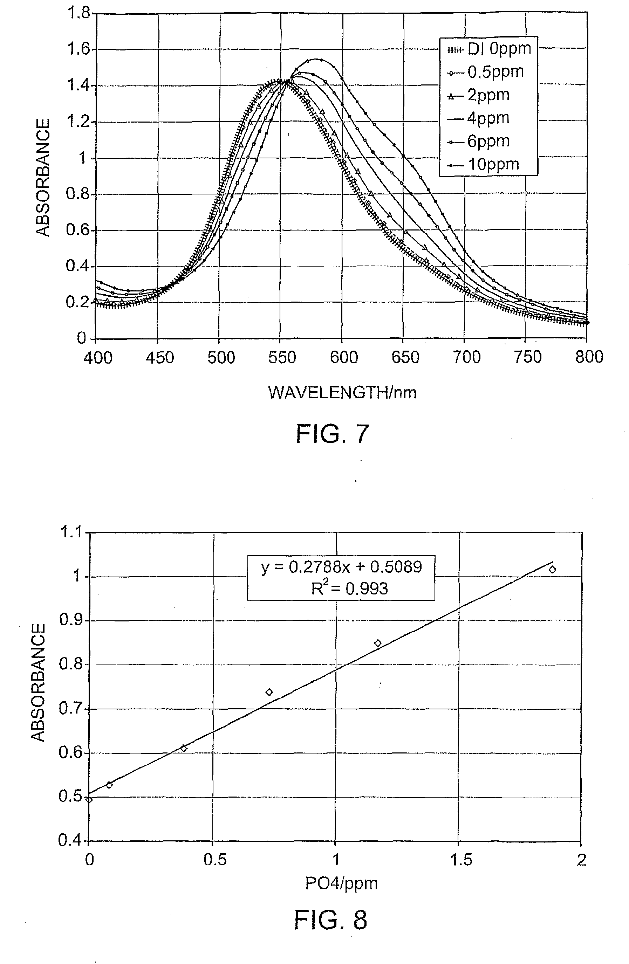

FIG. 7 shows a typical set of spectra at different phosphate concentrations for the described device. FIG. 8 shows the calibration curve for the described device obtained by plotting absorbances at 650 nm as a function of phosphate concentration.

### TEST 5. Preparation and testing of sensor comprising Azure B and molybdate salt in water: violet-to-blue reaction.

p-Toluenesulfonic acid (TsOH), ammonium molybdate and Azure B were dissolved in DI (deionized) water at required concentrations. A 2 mL solution of 0.05 M TsOH was mixed with 0.25 mL of 0.068 M ammonium molybdate solution followed by 0.1 mL of Azure B solution (4 mg in 10 mL water, Aldrich 227935) in a 1-cm disposable cuvette. About 0.5 mL of aqueous samples of phosphate at different concentrations were added to the above solution. UV-Vis spectra were recorded between 400 - 900 nm.

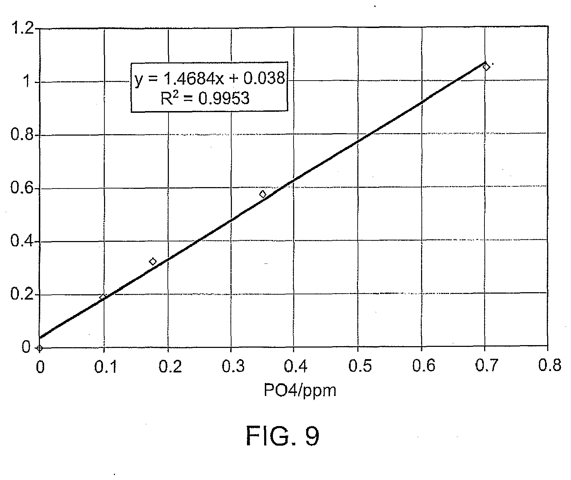

FIG. 9 shows a typical set of spectra at different phosphate concentrations for the described device.

### TEST 6. Preparation and testing of sensor comprising Azure B and molybdate salt in water: blue-to-violet reaction.

p-Toluenesulfonic acid (TsOH), ammonium molybdate and Azure B were dissolved in DI (deionized) water at required concentrations. A 2 mL solution of 0.5 M TsOH was mixed with 0.25 mL of 0.068 M ammonium molybdate solution followed by 0.1 mL of Azure B solution (4 mg in 10 mL water, Aldrich 227935) in a 1-cm disposable cuvette. About 0.5 mL of aqueous samples of phosphate at different concentrations were added to the above solution. UV-Vis spectra were recorded between 400 - 900 nm.

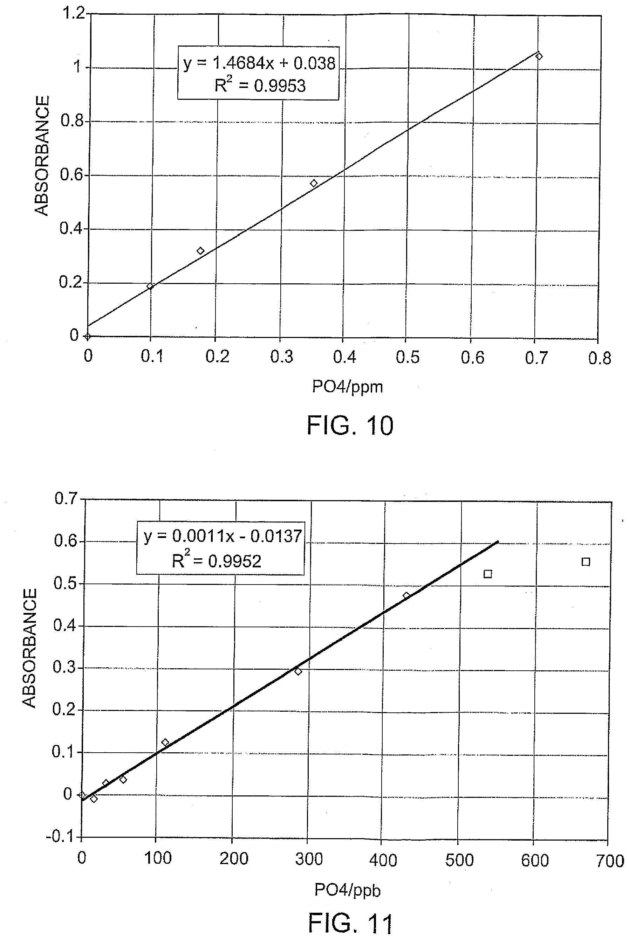

FIG. 10 shows the calibration curve for the described device obtained by plotting absorbances at 650 nm as a function of phosphate concentration.

### TEST 7. Preparation and testing of sensor comprising Brilliant Cresyl Blue and molybdate salt in water: blue-to-violet reaction.

p-Toluenesulfonic acid (TsOH) was dissolved in DI (deionized) water at required concentrations. A 0.1 mL of 0.0068 M ammonium molybdate solution (in 0.154 M TsOH) was mixed with 0.1 mL of 0.178 mM BCB solution (Aldrich 858374) (in 0.166 M TsOH) in a 1-cm disposable cuvette. About 2 mL of aqueous samples of phosphate at different concentrations were added to the above solution. UV-Vis spectra were recorded between 400 - 900 nm.

FIG. 11 shows the calibration curve for the described device obtained by plotting absorbances at 622 nm as a function of phosphate concentration.

### TEST 8. Preparation and testing of sensor comprising Azure B and molybdate salt in water: low concentration range calibration.

A 20 ml orthophosphate sample (containing 0 to 800 ppb phosphate as PO₄) was placed in a 2-inch cuvette, whose optical path length was 2.43 cm. Then 0.914 g 0.174 mM of Azure B (in 1.54 mol/kg TsOH) and 1.063 g 0.068 mol/kg of ammonium molybdate (in 1.54 mol/kg TsOH) were added into the cuvette. The absorbance at 650 nm with Hach DR2000 was measured three minutes after the reagents are added into the sample.

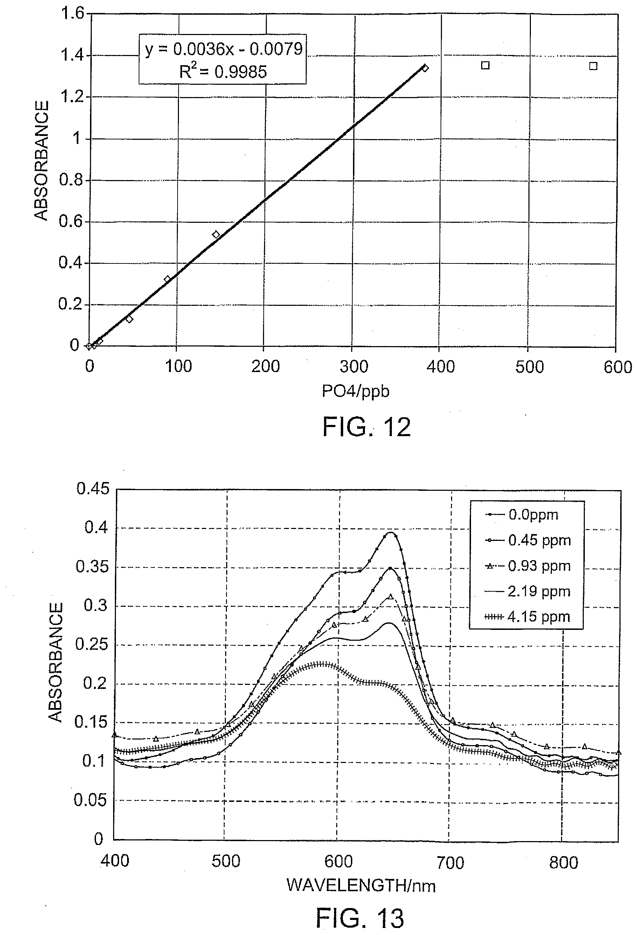

FIG. 12 shows the calibration curve for the described device obtained by plotting absorbances at 650 nm as a function of phosphate concentration. The molar extinction coefficient for this method was calculated from the slope of the calibration curve to be 140700 L/(mol cm).

### TEST 9. Determination of phosphate concentration in a tap water sample with a sensor comprising molybdate salt and Azure B.

p-Toluenesulfonic acid (TsOH), ammonium molybdate and Azure B were dissolved in DI (deionized) water at required concentrations. A 2 mL solution of 0.2 M TsOH was mixed with 0.25 mL of 0.034 M ammonium molybdate solution followed by 0.1 mL of Azure B solution (4 mg in 10 mL water) in a 1-cm disposable cuvette. About 0.5 mL of tap water sample was added to the above solution. UV-Vis spectrum was recorded between 400 - 900 nm. A calibration curve was obtained with phosphate standard solutions prepared from an ACS grade trisodium phosphate, which were standardized with Hach PhosVer 3 method: [PO4]/ppm =
-2.867·A₆₅₀ + 5.915. The unknown phosphate concentration in the sample was determined to be 1.45 ppm. This value agreed with 1.47 ppm analyzed by ICP and 1.25 ppm by the Hach method. A survey of other contaminants in this water sample was conducted using an ICP emission spectrometer. The major species were: Ca, 62 ppm; Mg, 16 ppm; Si, 5.2 ppm.

### TEST 10. Preparation and testing of sensor comprising Azure B and molybdate salt in a polymer matrix.

Ammonium molybdate and Azure B were dissolved in deionized water or 1-methoxy-2-propanol (Dowanol PM) at required concentrations. To a 0.15 mL solution of 9.12 mM Azure B was added 0.05 mL of 0.68 M ammonium molybdate, and 0.33 g TsOH in 5 g solution of 20% pHEMA in Dowanol. The sensor device was prepared by flow coating a polycarbonate sheet with a thin layer of the chemical mixture and allowed to dry over a period of several hours in the dark. The final film thickness was between 5 and 20 microns. The sensor device was exposed to about 50 µL of aqueous samples of phosphate at various concentrations by spotting onto the film surface. The liquid sample was removed 2 minutes after spotting the sample and dried with a constant airflow. The sensor device was then measured for phosphate response. The device was placed in a dark room on a flat surface. The sensor device response was measured using a spectrophotometer equipped with a fiber-optic probe. The probe was oriented at an angle of 90° with respect to the device. Polycarbonate over white paper was used as background.

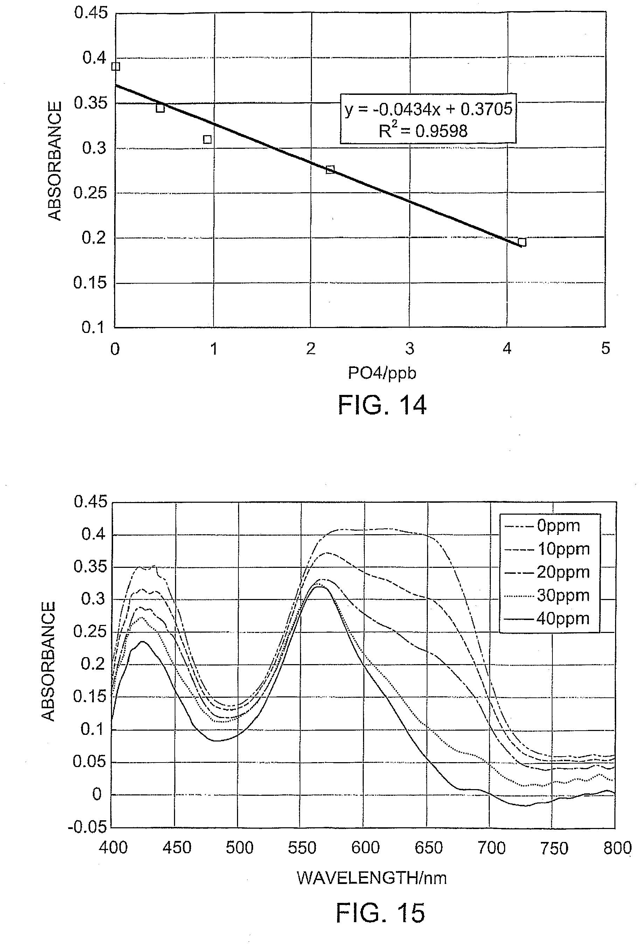

FIG. 13 shows a typical set of spectra at different phosphate concentrations for the described device. FIG. 14 shows the calibration curve for the described device obtained by plotting absorbances at 650 nm as a function of phosphate concentration.

### TEST 11. Preparation and testing of sensor comprising Malachite Green and molybdate salt in a polymer matrix.

Malachite Green (8 mg), TsOH (105 mg) and 0.050 mL of 0.51 M ammonium molybdate solution were mixed in 2.5 g 20% pHEMA solution. The sensor device was prepared by flow coating a polycarbonate sheet with a thin layer of the chemical mixture and allowed to dry over a period of several hours in the dark. The final film thickness was between 5 and 20 microns. The sensor device was exposed to about 20 µL of aqueous samples of phosphate at various concentrations by spotting onto the film surface. The liquid sample was removed 2 minutes after spotting the sample and dried with a constant airflow. The sensor device was then measured for phosphate response. The device was placed in a dark room on a flat surface. The sensor device response was measured using a spectrophotometer equipped with a fiber-optic probe. The probe was oriented at an angle of 90° with respect to the device. Polycarbonate over white paper was used as background.

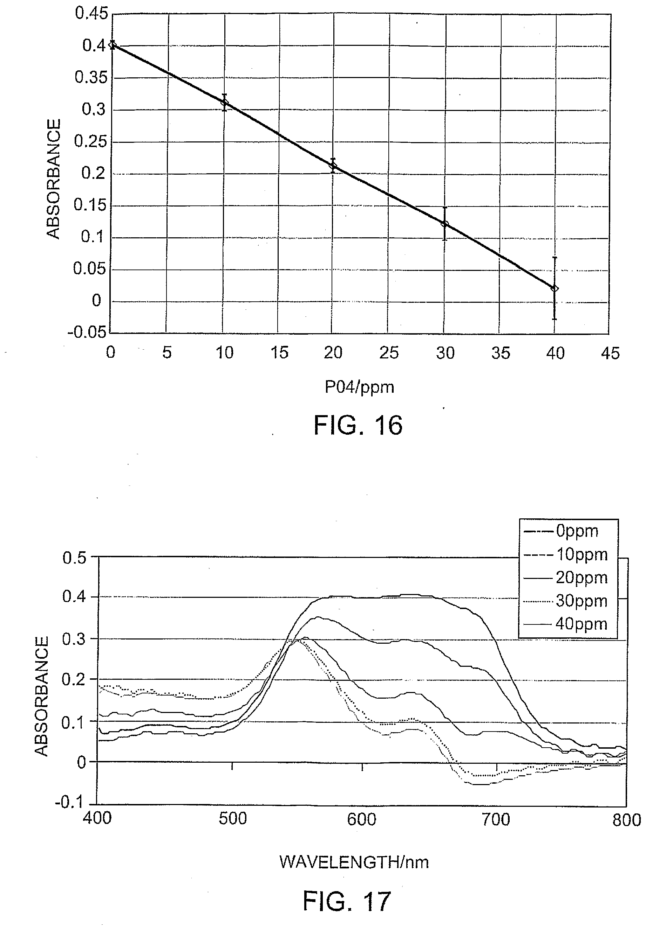

FIG. 15 shows a typical set of spectra at different phosphate concentrations for the described device. FIG. 16 shows the calibration curve for the described device obtained by plotting absorbances at 650 nm as a function of phosphate concentration.

### TEST 12. Preparation and testing of sensor comprising Basic Blue and molybdate salt in a polymer matrix.

Basic Blue 3 (5 mg), TsOH (105 mg) and 0.025 mL of 0.51 M ammonium molybdate solution were mixed in 2.5 g 20% pHEMA solution. The sensor device was prepared by flow coating a polycarbonate sheet with a thin layer of the chemical mixture and allowed to dry over a period of several hours in the dark. The final film thickness was between 5 and 20 microns. The sensor device was exposed to about 20 µL of aqueous samples of phosphate at various concentrations by spotting onto the film surface. The liquid sample was removed 2 minutes after spotting the sample and dried with a constant airflow. The sensor device was then measured for phosphate response. The device was placed in a dark room on a flat surface. The sensor device response was measured using a spectrophotometer equipped with a fiber-optic probe. The probe was oriented at an angle of 90° with respect to the device. Polycarbonate over white paper was used as background.

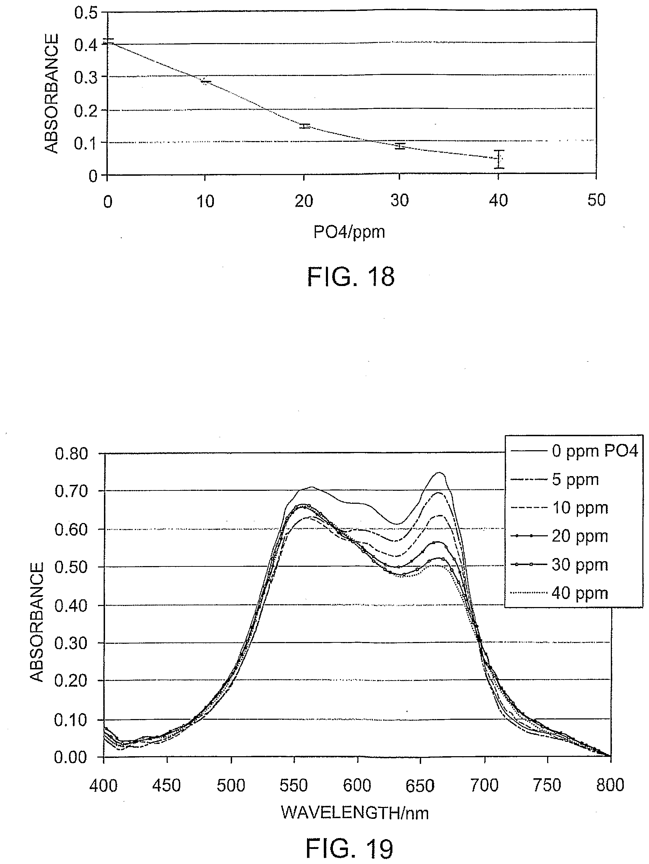

FIG. 17 shows a typical set of spectra at different phosphate concentrations for the described device. FIG. 18 shows the calibration curve for the described device obtained by plotting absorbances at 650 nm as a function of phosphate concentration.

### TEST 13. Preparation and testing of sensor comprising methylene blue and molybdate salt in a polymer matrix.

To a 2.5 g solution of 20% pHEMA in a hydroxyl ether based solvent, was added 2 mg of methylene blue, 5 mg sodium oxalate, 10 µL of a 0.64 M (NH₄)₆(Mo₇O₂₄).H₂O and 105 mg TsOH. The mixture was stirred at 21°C in the dark until all solids were dissolved. The device was prepared by coating a clear plastic surface with a thin layer of the chemical mixture and allowed to dry over a period of several hours in the dark. The final film thickness was between 5 and 20 microns. The device was exposed to about 50 µL of aqueous samples of phosphate at various concentrations. Exposure time was in general 120 seconds. The water sample was then removed and the film dried with a constant airflow. The device was then measured for phosphate response. The device was placed in a dark room on a flat surface. The sensor device response was measured using a spectrophotometer equipped with a fiber-optic probe. The probe was oriented at an angle of 90° with respect to the device.

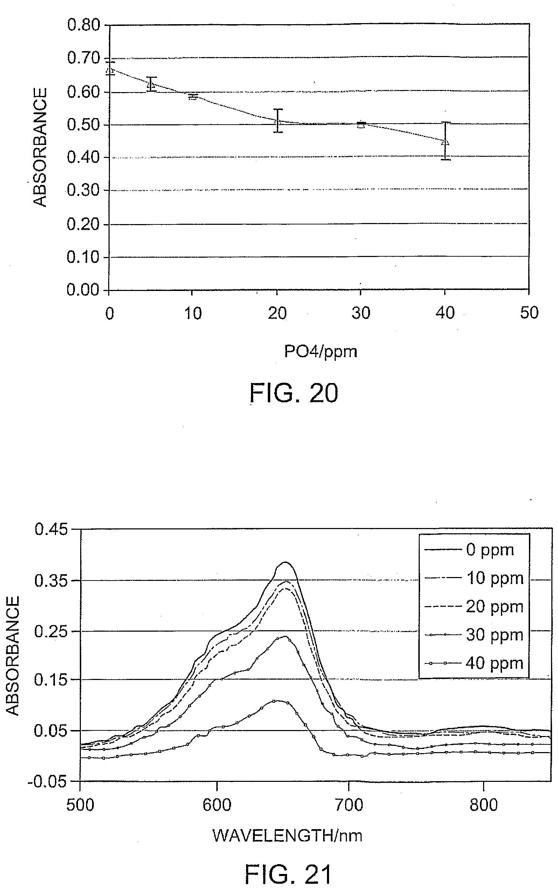

FIG. 19 shows a typical set of spectra at different phosphate concentrations for the described device. FIG. 20 shows the calibration curve for the described device obtained by plotting absorbances at 650 nm as a function of phosphate concentration.

### TEST 14. Preparation and testing of sensor comprising Basic Blue and molybdate salt in a plasticized polymer matrix.

Basic Blue 3 (9 mg), TsOH (672 mg), polyethylene glycol 400 (302 mg), ammonium molybdate (0.076 mL of 0.68 M aqueous solution), and sodium oxalate (24 mg) were mixed in 10.0 g 20% pHEMA solution. The sensor device was prepared by screen-printing onto a polycarbonate substrate with a thin layer of the chemical mixture and allowed to dry at 70°C for 5 minutes. The sensor was then stored in the dark at room temperature and ambient humidity over a period of 11 days. The final film thickness was between 5 and 20 microns. The sensor device was exposed to about 20 µL of aqueous samples of phosphate at various concentrations by spotting onto the film surface. The liquid sample was removed 2 minutes after spotting the sample and dried with a constant airflow. The sensor device was then measured for phosphate response. The device was placed in a dark room on a flat surface. The sensor device response was measured using a spectrophotometer equipped with a fiber-optic probe. The probe was oriented at an angle of 75° with respect to the device, although other angles have been demonstrated with similar results. Polycarbonate was used as background.

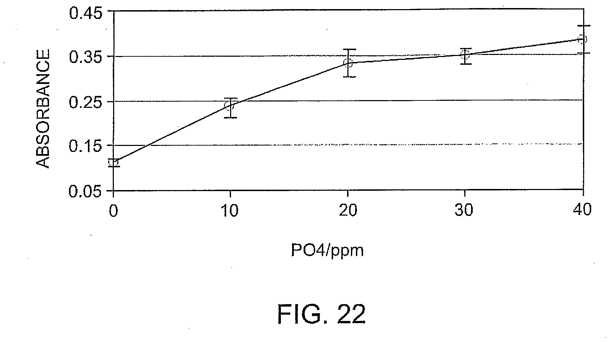

FIG. 21 shows a typical set of spectra at different phosphate concentrations for the described device. FIG. 22 shows the calibration curve for the described device obtained by plotting absorbances at 650 nm as a function of phosphate concentration.

### EXAMPLE 2. MOLYBDATE SENSOR

To a 10.0 g solution of 20% pHEMA (MW 300,000) in 1-methoxy-2-propanol (Dowanol PM), was added 20 mg Bromopyrogallol Red and 40 mg para-toluenesulfonic acid. After stirring for 1 hour, 200 mg benzyldimethyltetradecylammonium chloride (Zephiramine) was added. After an additional 1 hour of stirring, 40 mg L-ascorbic acid was added and the mixture stirred at room temperature until all solids were dissolved (minimum of 12 hours).

The sensor film was prepared by coating a clear plastic surface with a thin layer of the chemical mixture and allowed to dry over a period of several hours in the dark. The final film thickness was between 10 and 20 microns.

The sensor film was exposed to about 30 µL of aqueous samples of molybdate at various concentrations. Exposure time was in general 120 seconds. The water sample was then removed and the film dried under a constant airflow. The sensor film was then measured for molybdate response.

The sensor film was places in a dark room on a flat surface. The sensor film response was measured using an OceanOptics spectrophotometer equipped with a fiber-optic probe. The probe was oriented at a 90° with respect to the sensor film

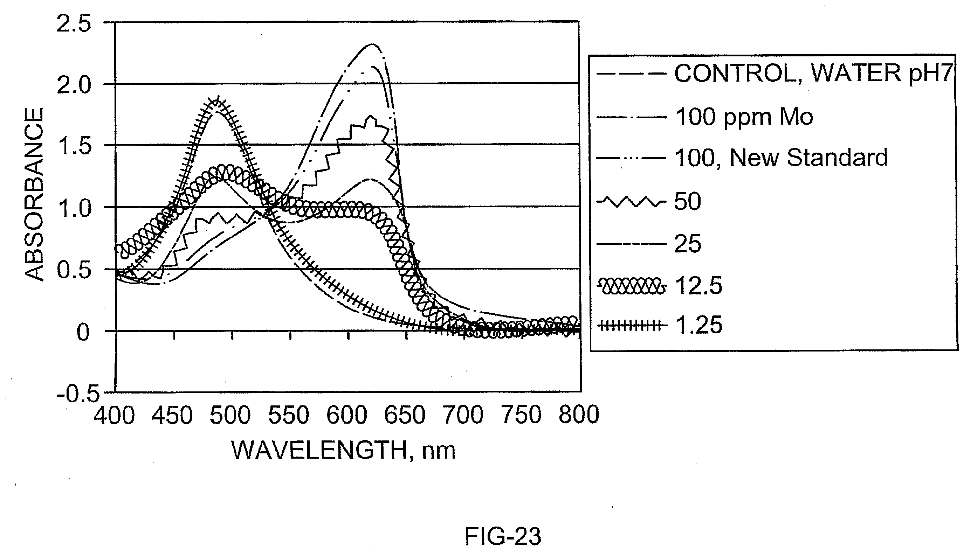

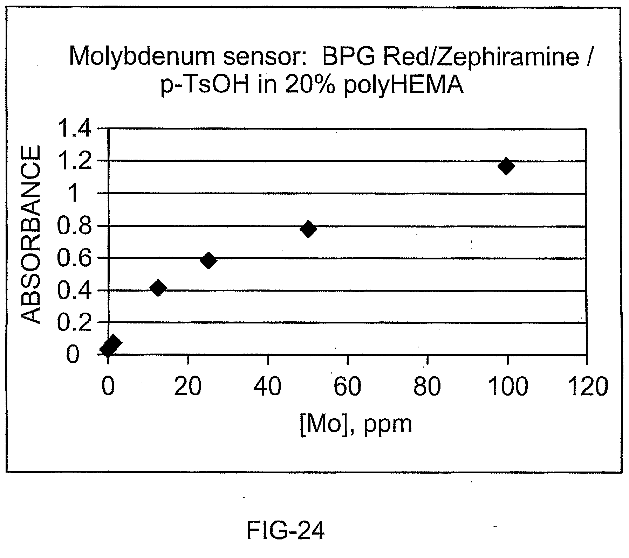

FIG. 23 shows a typical set of spectra at different molybdate concentrations for the described sensor film. FIG. 24 show a typical response curves for the described sensor film.

### EXAMPLE 3. MAGNESIUM SENSOR

Chemical mixture preparation: To a 10.0 g solution of 20% pHEMA (MW 300,000) in 1-methoxy-2-propanol (Dowanol PM), was added 50 mg Xylidyl Blue 1, sodium salt and 300 mg tetrabutylammonium bromide (TBAB). After stirring for 1 hour, 500 mg of a 40% (w/w) solution of polyethylenimine (low molecular weight Mn approx. 1000, water-free) in 1-methoxy-2-propanol (Dowanol PM) was added. After an addition 1 hour stirring, 400 mg ethylene glycol-bis(aminoethylether)-N,N,N',N'- tetraacetic acid, tetrasodium salt (EGTA-Na4) was added and the mixture stirred at room temperature until all solids were dissolved (minimum of 12 hour).

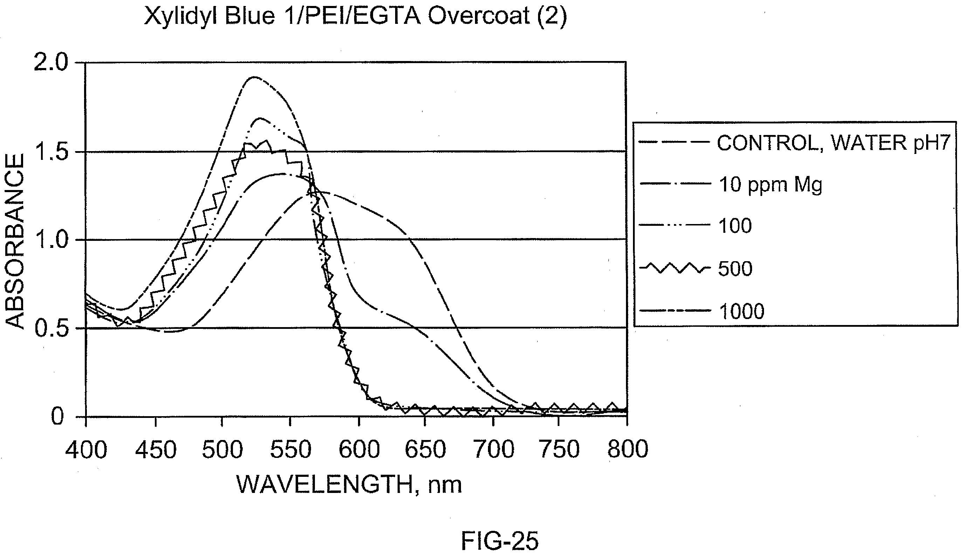

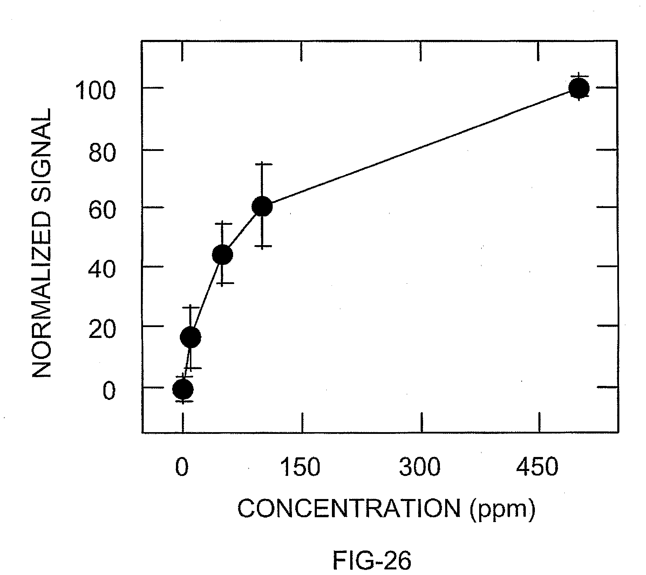

FIG. 25 shows a typical set of spectra at different magnesium concentrations for the described sensor film. FIG. 26 shows a typical response curve for the described sensor film.

### EXAMPLE 4. HARDNESS SENSOR

Chemical mixture preparation: To a 10.0 g solution of 20% pHEMA (MW 300,000) in 1-methoxy-2-propanol (Dowanol PM), was added 50 mg Xylidyl Blue I, sodium salt and 500 mg of a 40% (w/w) solution of polyethylenimine (low molecular weight Mn approximately 1000, water-free) in 1-methoxy-2-propanol (Dowanol PM). The mixture was stirred at room temperature until all solids were dissolved (minimum of 12 hour).

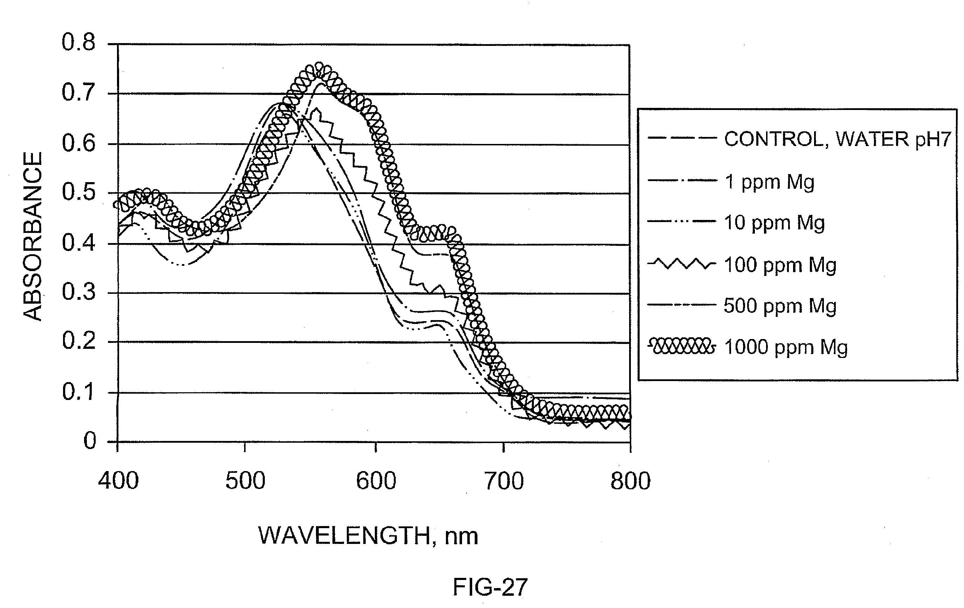

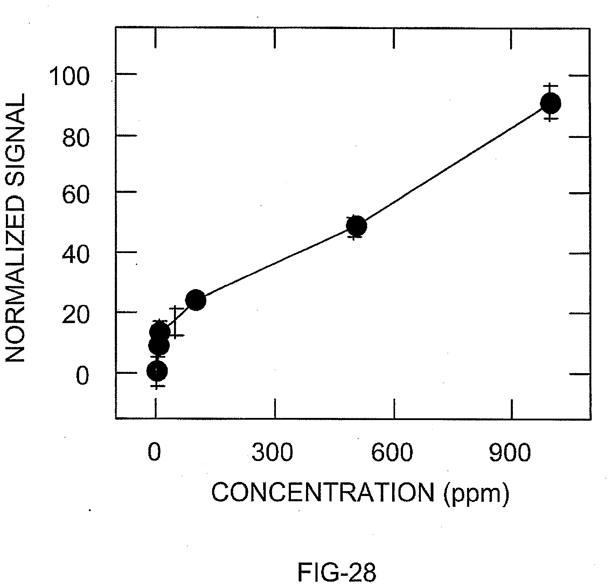

FIG. 27 shows a typical set of spectra at different hardness concentrations for the described sensor film. FIG. 28 shows a typical response curve for the described sensor film.

### EXAMPLE 5. CALCIUM SENSOR

Chemical mixture preparation: To a 10.0 g solution of 20% pHEMA (MW 300,000) in 1-methoxy-2-propanol (Dowanol PM), was added 25 mg Chlorophosphonazo III and 200 mg para-toluenesulfonic acid. The mixture was stirred at room temperature for 1 hour, before 60 mg tridocecylmethylammonium chloride (TDMAC) was added. The mixture was stirred at room temperature until all solids were dissolved (minimum of 12 hour).

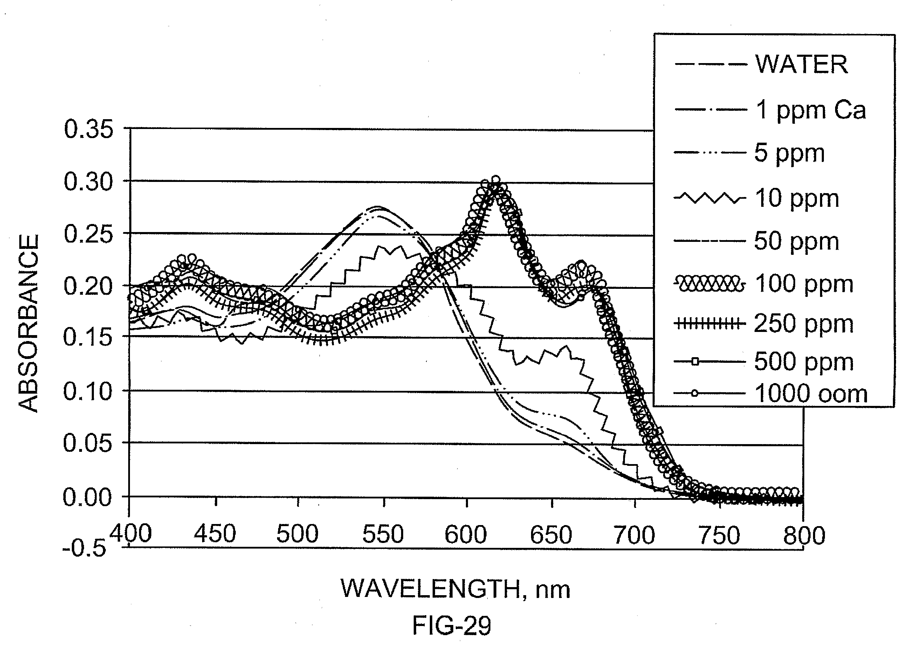

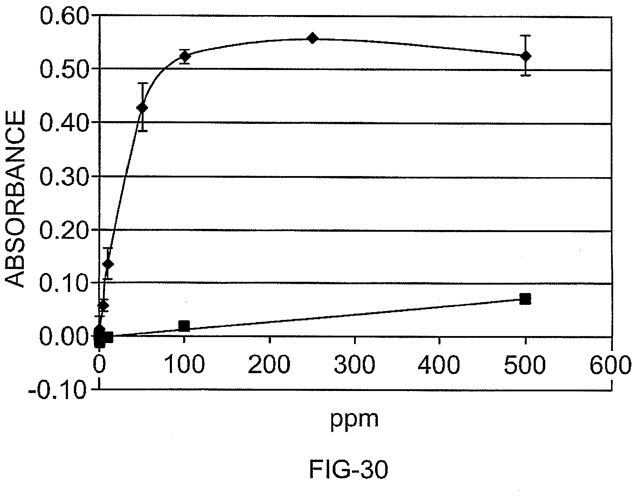

FIG. 29 shows a typical set of spectra at different calcium concentrations for the described sensor film. FIG. 30 shows a typical response curve for the described sensor film.

### EXAMPLE 6. SULFITE SENSOR

Chemical mixture preparation: To a 10.0 g solution of 20% pHEMA (MW 300,000) in 1-methoxy-2-propanol (Dowanol PM), was added 8 mg Brilliant Green and 120 mg tetrabutylammonium bromide (TBAB). The mixture was stirred at room temperature until all solids were dissolved (minimum of 12 hour).

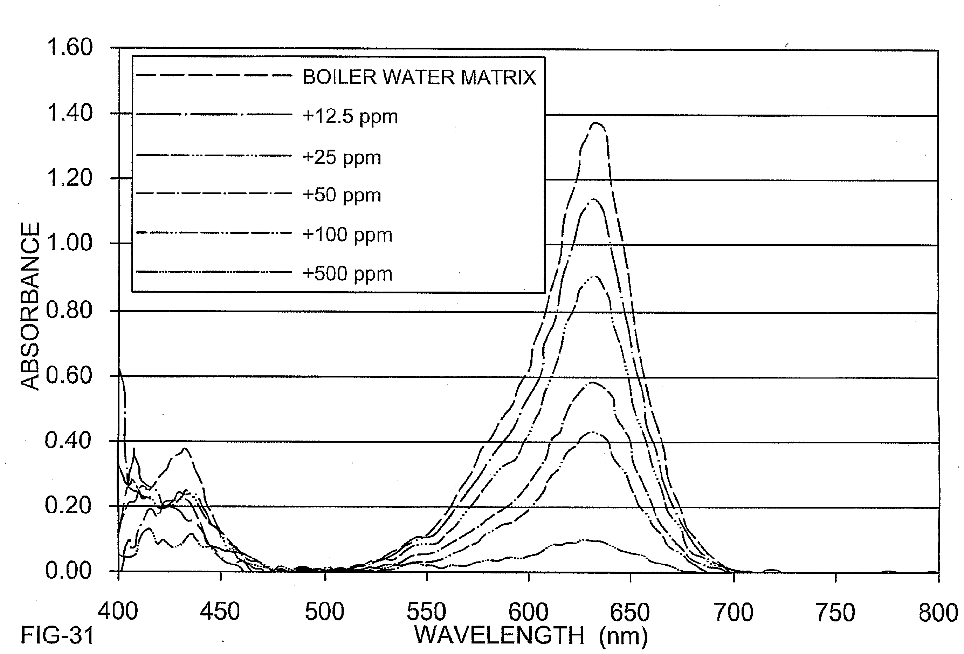

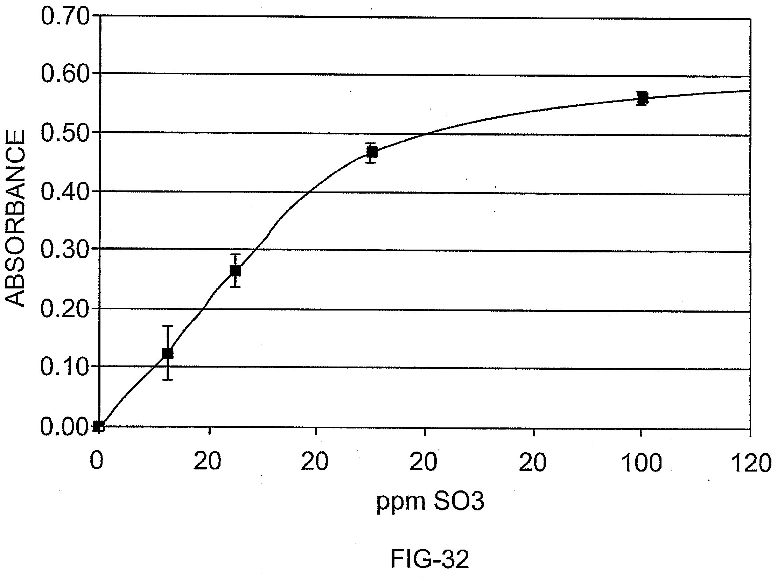

FIG. 31 shows a typical set of spectra at different sulfite concentrations for the described sensor film. FIG. 32 shows a typical response curve for the described sensor film.

### EXAMPLE 7. SULFITE SENSOR II

### (prepared to withstand highly alkaline, high pH water samples)

The following example serves to illustrate how it is possible to buffer a chemical film (sulfite) by overcoating a first film with a second buffering film. The two-layer film provides a method to allow measurement of a desired analyte (sulfite) in an extreme water environment (very high pH (pH 12) and very high alkalinity (1000 mg/L M-alkalinity). Without the overcoating of the first film with the second buffering film, the sensor film tends to respond to the high pH of the water sample and not to the desired analyte (sulfite).

Chemical mixture I preparation: To a 10.0 g solution of 25% pHEMA (MW 300,000) in a 65/35 wt% mixture of di(ethylene glycol) methyl ether (Dowanol DM) and 1-methoxy-2-propanol (Dowanol PM), was added 8 mg Brilliant Green, 120 mg tetrabutylammonium bromide (TBAB), and 36 mg potassium phosphate, monobasic (KH₂PO₄) dissolved in 200 mL water. The mixture was stirred at room temperature until all solids were dissolved (minimum of 12 hour). The sensor film was prepared by coating a clear plastic surface with a thin layer of the chemical mixture and allowed to dry over a period of several hours in the dark. The final film thickness was between 5 and 20 microns.

Chemical mixture II preparation: To a 10.0 g solution of 25% pHEMA (MW 300,000) in a 65/35 wt% mixture of di(ethylene glycol) methyl ether (Dowanol DM) and 1-methoxy-2-propanol (Dowanol PM), was added 120 mg tetrabutylammonium bromide (TBAB), and 36 mg potassium phosphate, monobasic (KH₂PO₄) dissolved in 200 mL water. The mixture was stirred at room temperature until all solids were dissolved (minimum of 12 hour). Chemical mixture II was coated over the dried chemical mixture I film prepared on a clear plastic surface and was allowed to dry over a period of several hours in the dark. The combined final film thickness was between 10 and 40 microns.

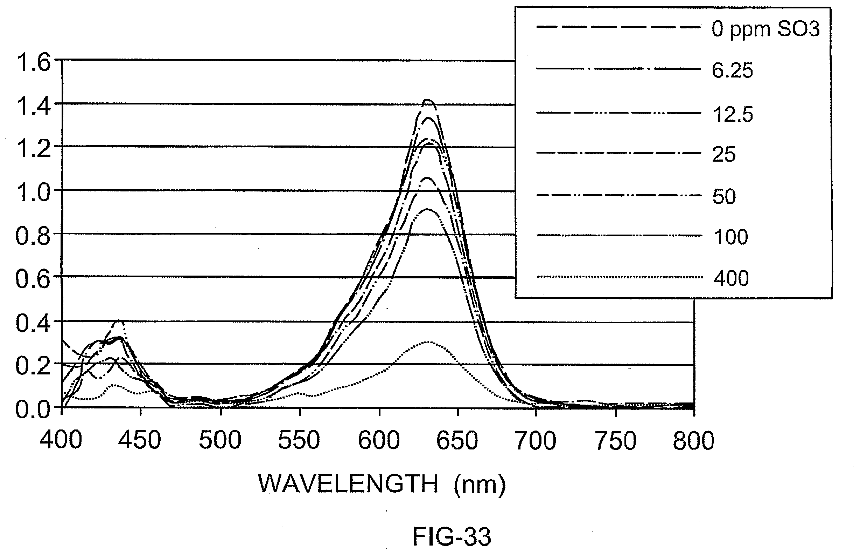

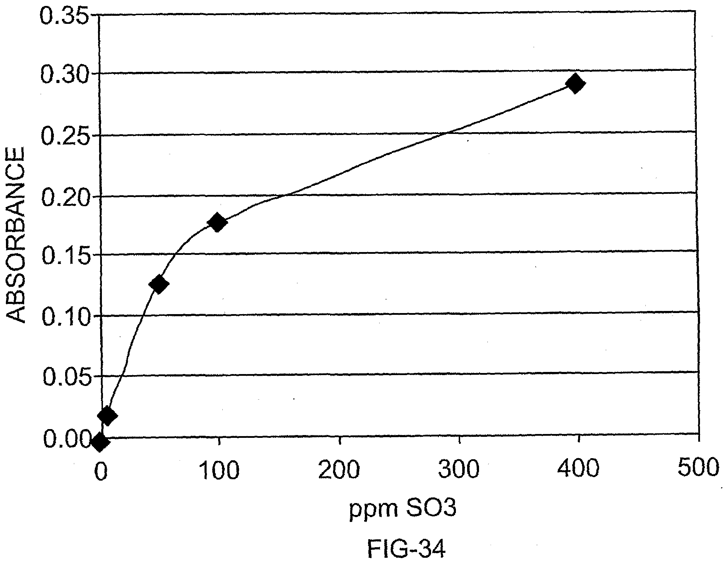

FIG. 33 shows a typical set of spectra at different sulfite concentrations for the described device. Sulfite concentrations were prepared in a highly alkaline (1000 mg/L M- alkalinity) and high pH (ph 12) water matrix. FIG. 34 shows a typical response curve for the described device.

### EXAMPLE 8. ALKALINITY SENSOR

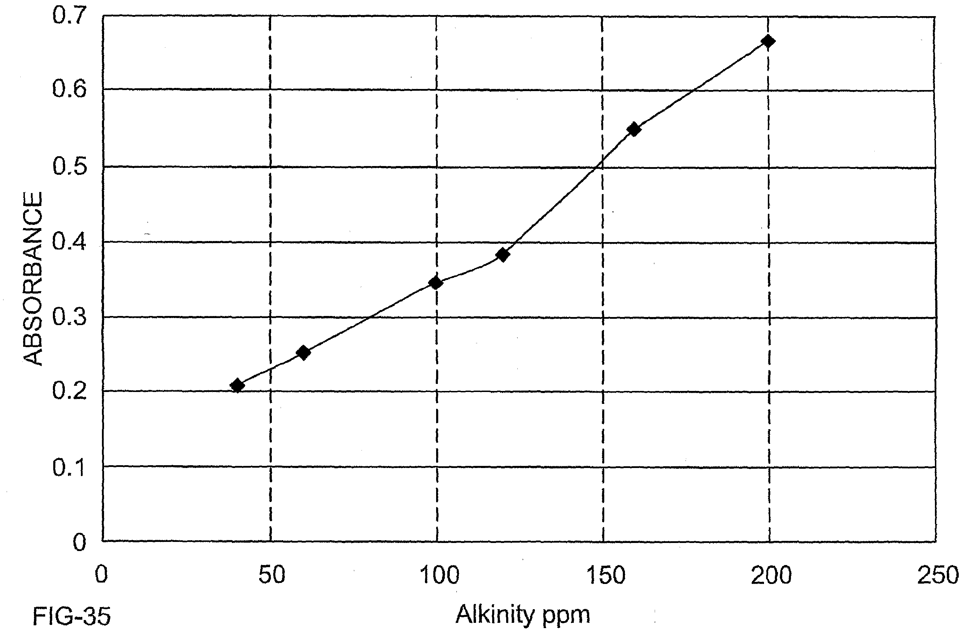

The acid used in this example is p-toluenesulfonic acid, and the indicator used is bromoscresol green (pKa = 4.9 in aqueous phase). Polymer solution compositions are listed in Table 2. Films were prepared by depositing an 8 µl polymer solution into wells on a glass slide. The wells (5.4 mm diameter and 0.32 mm deep) were created with a die-cut, adhesive-backed polymer mask layer. The mask layer was not removed during the test. Average absorbance at 650 nm is used to quantify the sample total alkalinity. A calibration curve is shown in FIG. 35.

**Table 2. Polymer solution composition**

| | | |
|---|---|---|
| Spot # | TsOH (%) | PHEMA = 10% |
| 1 | 0.08 | BCG = 0.1% |
| 2 | 0.16 | CTAMB = 0.2% |
| 3 | 0.32 | |
| 4 | 0.40 | |
| 5 | 0.48 | |
| 6 | 0.64 | |

### EXAMPLE 9. CHLORINE SENSOR

In one embodiment, Nafion polymer was added to the sensor formulation. The addition of Nafion resulted in the improvement of the relative response of the sensor film when sensor signal change is normalized by the remaining absorbance at highest tested concentration. Above and below this concentration, the effect was diminished. One suitable indicator is 2-[2-[3-[(1,3-Dihydro-3,3-dimethyl-1-propyl-2H-indol-2-ylidene)ethylidene]-2-phenoxy-1-cyclohexen-1-yl]ethenyl]-3,3-dimethyl-1-propylindolium perchlorate known as IR 768 perchlorate..

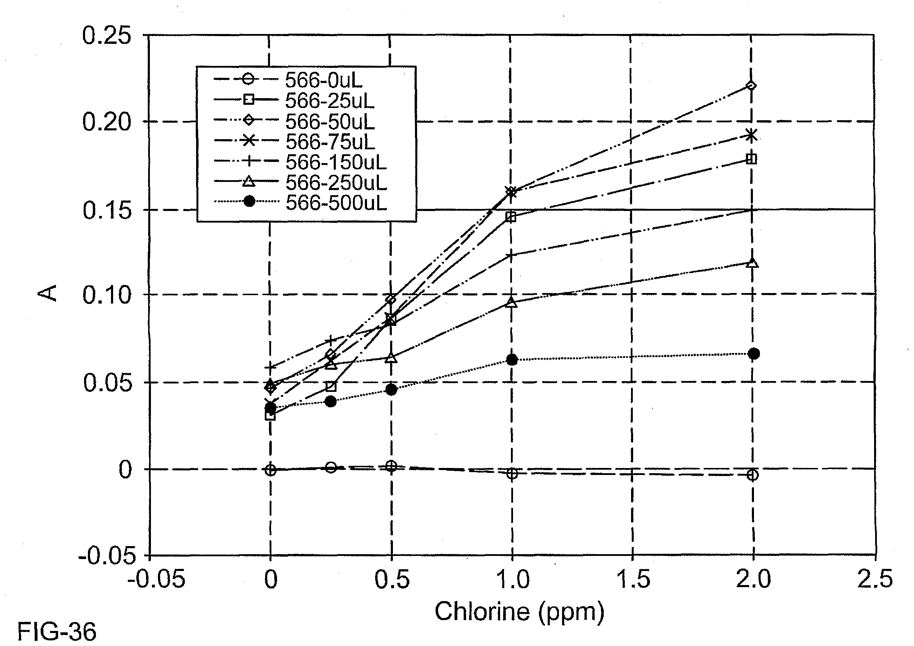

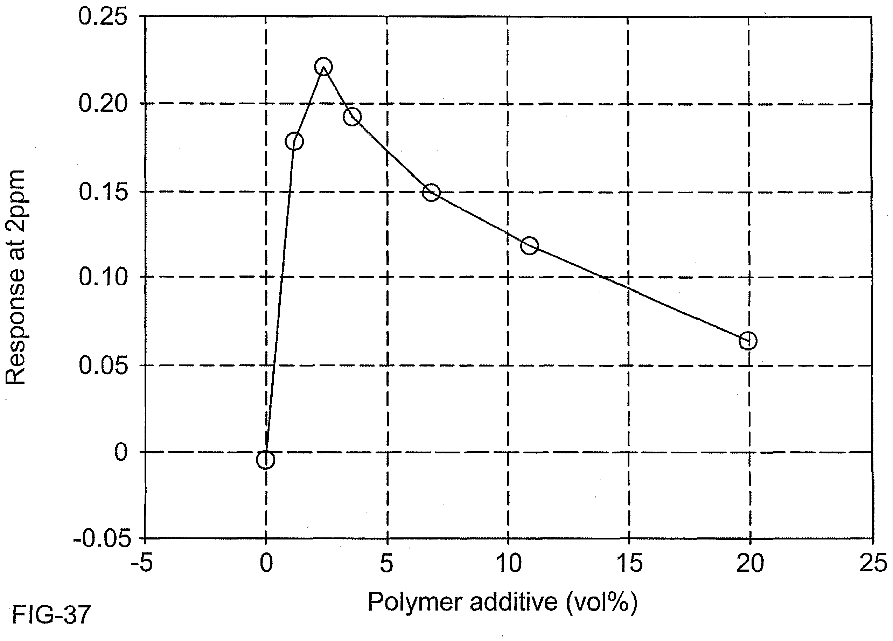

FIG. 36 shows an improvement of sensitivity of response when measured at 566 nm upon addition of increasing amounts of Nafion solution to 2000 µL of dye formulation. This improvement can be plotted as the sensor signal upon exposure to 2 ppm of chlorine as shown in FIG. 37. This figure demonstrates an existence of a critical non-intuitive region of concentration of Nafion in PHEMA where a maximum sensor response is obtained.

## Claims

1. A method of quantitatively measuring the concentration of a chemical species in a sample solution with a sensor self-contained sensor film, said method comprising:
preparing a hydrogel sensor film having a chemical composition comprising an indicator that changes its optical properties upon being exposed to the chemical species in the sample solution;
immobilizing the indicator in the hydrogel film by forming an ion pair between the indicator and a quaternary ammonium, quaternary phosphonium, quaternary imidazolium, quaternary pyridium, quaternany pyrrolidinium, or quaternary sulfonium ion, wherein the concentration of quaternary ammonium, quaternary phosphonium, quaternary imidazolium, quaternary pyridium, quaternany pyrrolidinium, or quaternary sulfonium salt is 5 - 1000 times greater than the stoichiometric amount required to ion pair the indicator;
exposing the film to a fixed amount of the sample solution;
measuring the absorbance of the self-contained sensor film at a wavelength near the maximum absorbance peak (λmax) of the indicator using optical scanning equipment; and quantifying the concentration of the chemical species in the sample solution using the average absorbance measured from the sensor film;
wherein the self-contained sensor film is selected from the group consisting of a phosphate sensor, a molybdate sensor film, a magnesium sensor film, a hardness sensor film, a calcium sensor film, a sulfite sensor film, an alkalinity sensor film, and a chlorine sensor film.

2. The method of claim 1, wherein the sensor film is self-contained such that it does not need auxiliary reagents outside the film to measure the concentration of the chemical species and wherein the optical response is in the UV, visible, or near-IR spectral ranges with said change in optical property comprising a change in elastic scattering, inelastic scattering, absorption, luminescence intensity, luminescence lifetime or polarization state and said converting is conducted by using a calibration curve.

3. The method according to claim 1, wherein sensor film is prepared by coating a clear plastic surface with a thin layer of a chemical mixture and allowed to dry, said film having a thickness between 10 and 20 microns.

4. The method according to claim 1, wherein chemical composition added in the hydrogel films comprises an organic salt or surfactant and an acid.

5. The method according to claim 1, wherein the sensor comprises at least one analyte-specific reagent comprising a molybdate salt and a dye and a pH-modifier comprising at least one sulfonic acid.

6. The method according to claim 1, wherein the indicator is pH modified in the hydrogel film by using an acid selected from the group consisting of sulfonic acid, phosphonic acid, carboxylic acid and phenol, wherein the concentration of the acid is substantially higher that the stoichiometric amount required to ion pair the indicator.

7. The method according to claim 1 wherein the sensor film is selected from (a) a molybdate sensor film prepared by adding Bromopyrogallol Red, calcium sensor film prepared by adding Chlorophosphonazo III, para-toluenesulfonic acid and benzyldimethyltetradecylammonium chloride (Zephiramine) to pHEMA; (b) a magnesium sensor film prepared by adding Xylidyl Blue 1, sodium salt and tetrabutylammonium bromide (TBAB) polyethylenimine, ethylene glycol-bis(aminoethylether)-N,N,N',N'-tetraacetic acid, tetrasodium salt (EGTA-Na4) to pHEMA; (c) a hardness sensor film prepared by adding oxazine, thiazine, azo, triphenylmethane, cyanine, carbocyanine or inoline dye, metal salt and polyalkylenimine to pHEMA; (d) a molybdate, calcium or sulfite sensor film prepared by an oxazine, thiazine, azo, triphenylmethane, cyanine, carbocyanine or inoline dye, a sulfonic acid, phosphonic acid, carboxylic acid or and phenol and a quaternary ammonium, quaternary phosphonium, quaternary pyridinium, quaternary pyrrolidinium, quaternary imidazolium, or sulfonium salt to pHEMA (MW 300,000); (e) a sulfite sensor film prepared by adding Brilliant Green and tetrabutylammonium bromide (TBAB) to pHEMA; (f) a chlorine sensor film prepared by adding Nafion to an oxazine, thiazine, azo, triphenylmethane, cyanine, carbocyanine or inoline dye to pHEMA; (g) a phosphate sensor film prepared with at least one analyte-specific reagent comprising a metal complex and a dye, a pH-modifier comprising at least one sulfonic acid, and at least one non-aqueous solvent.

## Patentansprüche

1. Verfahren zum quantitativen Messen der Konzentration einer chemischen Spezies in einer Probenlösung mit einem Sensor-eigenständigen Sensorfilm, wobei das Verfahren umfasst:
Herstellen eines Hydrogel-Sensorfilms mit einer chemischen Zusammensetzung, die einen Indikator umfasst, der seine optischen Eigenschaften bei Exposition gegenüber der chemischen Spezies in der Probenlösung verändert;
Immobilisieren des Indikators in dem Hydrogel-Film durch Bilden eines Ionenpaars zwischen dem Indikator und einem quaternären Ammonium-, quaternären Phosphonium-, quaternären Imidazolium-, quaternären Pyridium-, quaternären Pyrrolidinium- oder quaternären Sulfonium-Ion, wobei die Konzentration von quaternärem Ammonium-, quaternärem Phosphonium-, quaternärem Imidazolium-, quaternärem Pyridium-, quaternärem Pyrrolidinium- oder quaternärem Sulfoniumsalz 5- bis 1000-mal höher als die für die Ionenpaarung des Indikators erforderliche stöchiometrische Menge ist;
Exponieren des Films gegenüber einer festgelegten Menge der Probenlösung;
Messen der Absorbanz des eigenständigen Sensorfilms bei einer Wellenlänge nahe dem höchsten Absorbanz-Maximum (λmax) des Indikators unter Verwendung einer optischen Scanning-Einrichtung; und
Quantifizieren der Konzentration der chemischen Spezies in der Probenlösung unter Verwendung der von dem Sensorfilm gemessenen mittleren Absorbanz;
wobei der eigenständige Sensorfilm ausgewählt ist aus der Gruppe bestehend aus einem Phosphatsensor, einem Molybdatsensorfilm, einem Magnesiumsensorfilm, einem Härtesensorfilm, einem Calciumsensorfilm, einem Sulfitsensorfilm, einem Alkalitätssensorfilm und einem Chlorsensorfilm.

2. Verfahren gemäß Anspruch 1, wobei der Sensorfilm eigenständig ist, so dass er keine Hilfsreagenzien außerhalb des Films benötigt, um die Konzentration der chemischen Spezies zu messen, und wobei die optische Antwort in dem UV-, sichtbaren oder Nah-IR-Spektralbereich liegt, wobei die Veränderung der optischen Eigenschaft eine Veränderung der elastischen Streuung, inelastischen Streuung, Absorption, Lumineszenzintensität, Lumineszenz-Lebensdauer oder des Polarisationszustands umfasst und das Umwandeln unter Verwendung einer Kalibrierkurve durchgeführt wird.

3. Verfahren gemäß Anspruch 1, wobei der Sensorfilm durch Beschichten einer klaren Kunststoffoberfläche mit einer dünnen Schicht eines chemischen Gemischs und Trocknenlassen hergestellt wird, wobei der Film eine Dicke zwischen 10 und 20 Mikrometer aufweist.

4. Verfahren gemäß Anspruch 1, wobei die zugegebene chemische Zusammensetzung in den Hydrogel-Filmen ein organisches Salz oder ein grenzflächenaktives Mittel und eine Säure umfasst.

5. Verfahren gemäß Anspruch 1, wobei der Sensor wenigstens ein analytspezifisches Reagens umfassend ein Molybdatsalz und einen Farbstoff und einen pH-Modifikator umfassend wenigstens eine Sulfonsäure umfasst.

6. Verfahren gemäß Anspruch 1, wobei der Indikator in dem Hydrogel-Film unter Verwendung einer Säure ausgewählt aus der Gruppe bestehend aus Sulfonsäure, Phosphonsäure, Carbonsäure und Phenol pH-Wertmodifiziert wird, wobei die Konzentration der Säure wesentlich höher als die für die Ionenpaarung des Indikators erforderliche stöchiometrische Menge ist.

7. Verfahren gemäß Anspruch 1, wobei der Sensorfilm ausgewählt ist aus (a) einem Molybdatsensorfilm, hergestellt durch Zugeben von Brompyrogallolrot, einem Calciumsensorfilm, hergestellt durch Zugeben von Chlorphosphonazo III, para-Toluolsulfonsäure und Benzyldimethyltetradecylammoniumchlorid (Zephiramin) zu pHEMA; (b) einem Magnesiumsensorfilm, hergestellt durch Zugeben von Xylidylblau 1, Natriumsalz und Tetrabutylammoniumbromid (TBAB), Polyethylenimin, Ethylenglycol-bis(aminoethylether)-N,N,N',N'-tetraessigsäure-Tetranatriumsalz (EGTA-Na4) zu pHEMA; (c) einem Härtesensorfilm, hergestellt durch Zugeben von Oxazin-, Thiazin-, Azo-, Triphenylmethan-, Cyanin-, Carbocyanin- oder Inolinfarbstoff, Metallsalz und Polyalkylenimin zu pHEMA; (d) einem Molybdat-, Calcium- oder Sulfitsensorfilm, hergestellt durch einen Oxazin-, Thiazin-, Azo-, Triphenylmethan-, Cyanin-, Carbocyanin- oder Inolinfarbstoff, eine Sulfonsäure, Phosphonsäure, Carbonsäure oder/und Phenol und ein quaternäres Ammonium-, quaternäres Phosphonium-, quaternäres Pyridium-, quaternäres Pyrrolidinium-, quaternäres Imidazolium- oder quaternäres Sulfoniumsalz zu pHEMA (MW 300.000); (e) einem Sulfitsensorfilm, hergestellt durch Zugeben von Brilliantgrün und Tetrabutylammoniumbromid (TBAB) zu pHEMA; (f) einem Chlorsensorfilm, hergestellt durch Zugeben von Nafion zu einem Oxazin-, Thiazin-, Azo-, Triphenylmethan-, Cyanin-, Carbocyanin- oder Inolinfarbstoff zu pHEMA; (g) einem Phosphatsensorfilm, hergestellt mit wenigstens einem analytspezifischen Reagens umfassend einen Metallkomplex und einen Farbstoff, einem pH-Modifikator umfassend wenigstens eine Sulfonsäure, und wenigstens einem nichtwässrigen Lösungsmittel.

## Revendications

1. Procédé de mesure quantitative de la concentration d'une espèce chimique dans une solution échantillonnée avec un film de détection autonome d'un capteur, ledit procédé comprenant les étapes suivantes :
préparer un film de détection en hydrogel ayant une composition chimique comprenant un indicateur qui voit ses propriétés optiques varier lorsqu'il est exposé à l'espèce chimique dans la solution échantillonnée ;
immobiliser l'indicateur dans le film d'hydrogel en formant une paire d'ions entre l'indicateur et un ion ammonium quaternaire, phosphonium quaternaire, imidazolium quaternaire, pyridium quaternaire, pyrrolidinium quaternaire ou sulfonium quaternaire, la concentration du sel d'ammonium quaternaire, phosphonium quaternaire, imidazolium quaternaire, pyridium quaternaire, pyrrolidinium quaternaire ou sulfonium quaternaire étant 5-1000 fois plus grande que la quantité stoechiométrique nécessaire pour apparier l'ion de l'indicateur ;
exposer le film à une quantité fixe de la solution échantillonnée ;
mesurer l'absorbance du film de détection autonome à une longueur d'onde proche du pic d'absorbance maximale (λmax) de l'indicateur en utilisant un équipement de balayage optique ; et
quantifier la concentration de l'espèce chimique dans la solution échantillonnée en utilisant l'absorbance moyenne mesurée à partir du film de détection ;
dans lequel le film de détection autonome est choisi dans le groupe constitué par un détecteur de phosphate, un film de détection de molybdate, un film de détection de magnésium, un film de détection de dureté, un film de détection de calcium, un film de détection de sulfite, un film de détection d'alcalinité, et un film de détection de chlore.

2. Procédé de la revendication 1, dans lequel le film de détection est autonome, de sorte qu'il n'y a pas besoin de réactifs auxiliaires à l'extérieur du film pour mesurer la concentration de l'espèce chimique, et dans lequel la réponse optique se situe dans les domaines spectraux UV, visible ou proche infrarouge avec ladite variation de propriété optique comprenant une variation de diffusion élastique, diffusion inélastique, absorption, intensité de luminescence, durée de vie de luminescence ou état de polymérisation et ladite conversion étant conduite en utilisant une courbe d'étalonnage.

3. Procédé selon la revendication 1, dans lequel le film de détection est préparé en recouvrant une surface plastique transparente avec une couche mince d'un mélange chimique et mis à sécher, ledit film ayant une épaisseur comprise entre 10 et 20 micromètres.

4. Procédé selon la revendication 1, dans lequel la composition chimique ajoutée dans les films d'hydrogel comprend un sel ou tensioactif organique et un acide.

5. Procédé selon la revendication 1, dans lequel le capteur comprend au moins un réactif spécifique d'un analyte comprenant un sel de molybdate et un colorant et un modificateur de pH comprenant au moins un acide sulfonique.

6. Procédé selon la revendication 1, dans lequel le pH de l'indicateur est modifié dans le film d'hydrogel en utilisant un acide choisi dans le groupe constitué par l'acide sulfonique, l'acide phosphonique, un acide carboxylique et le phénol, la concentration de l'acide étant sensiblement plus élevée que la quantité stoechiométrique nécessaire pour apparier l'ion de l'indicateur.

7. Procédé selon la revendication 1 dans lequel le film de détection est choisi parmi (a) un film de détection de molybdate préparé en ajoutant du rouge de bromopyrogallol, un film de détection de calcium préparé en ajoutant du Chlorophosphonazo III, de l'acide paratoluènesulfonique et du chlorure de benzyldiméthyl-tétradécylammonium (Zephiramine) à du pHEMA ; (b) un film de détection de magnésium préparé en ajoutant du bleu de xylidyle 1, un sel de sodium et du bromure de tétrabutylammonium (TBAB), de la polyéthylèneimine, de l'acide éthylène glycol-bis(aminoéthyléther)-N,N,N',N'-tétraacétique, un sel tétrasodique (EGTA-Na4) à du pHEMA ; (c) un film de détection de dureté préparé en ajoutant un colorant oxazine, thiazine, azoïque, triphénylméthane, cyanine, carbocyanine ou inoline, un sel métallique et une polyalkylènimine à du pHEMA ; (d) un film de détection de molybdate, calcium ou sulfite préparé par un colorant oxazine, thiazine, azoïque, triphénylméthane, cyanine, carbocyanine ou inoline, un acide sulfonique, acide phosphonique, acide carboxylique et/ou phénol et un sel d'ammonium quaternaire, phosphonium quaternaire, pyridinium quaternaire, pyrrolidinium quaternaire, imidazolium quaternaire ou sulfonium quaternaire à du pHEMA (PM 300 000) ; (e) un film de détection de sulfite préparé en ajoutant du vert brillant et du bromure de tétrabutylammonium (TBAB) à du pHEMA ; (f) un film de détection de chlore préparé en ajoutant du Nafion à un colorant oxazine, thiazine, azoïque, triphénylméthane, cyanine, carbocyanine ou inoline à du pHEMA ; (g) un film de détection de phosphate préparé avec au moins un réactif spécifique d'un analyte comprenant un complexe métallique et un colorant, un modificateur de pH comprenant au moins un acide sulfonique, et au moins un solvant non aqueux.
